(19)

Europäisches
Patentamt

European
Patent Office

Office européen
des brevets

(11) **EP 3 959 938 B1**

(12) **EUROPEAN PATENT SPECIFICATION**

(45) Date of publication and mention
of the grant of the patent:
**24.01.2024 Bulletin 2024/04**

(21) Application number: **20723295.0**

(22) Date of filing: **21.04.2020**

(51) International Patent Classification (IPC):
*H04W 74/08* (2009.01)     *H04W 74/00* (2009.01)

(52) Cooperative Patent Classification (CPC):
**H04W 74/0833; H04W 74/004; H04W 74/006**

(86) International application number:
**PCT/EP2020/061075**

(87) International publication number:
**WO 2020/216739 (29.10.2020 Gazette 2020/44)**

(54) **METHOD AND APPARATUS FOR RANDOM ACCESS**

VERFAHREN UND VORRICHTUNG FÜR DIREKTZUGRIFF

PROCÉDÉ ET APPAREIL D'ACCÈS ALÉATOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.04.2019   PCT/CN2019/084614**

(43) Date of publication of application:
**02.03.2022   Bulletin 2022/09**

(73) Proprietor: **Telefonaktiebolaget LM Ericsson
(publ)
164 83 Stockholm (SE)**

(72) Inventors:
• **LIN, Zhipeng
Nanjing, Jiangsu 211100 (CN)**
• **HARRISON, Robert Mark
Grapevine, Texas 76051 (US)**
• **LI, Jingya
417 58 Göteborg (SE)**

(74) Representative: **Laqua, Bernd Christian Kurt
Wuesthoff & Wuesthoff
Patentanwälte PartG mbB
Schweigerstraße 2
81541 München (DE)**

(56) References cited:
**WO-A1-2020/168285**

• QUALCOMM INCORPORATED: "Procedures for
Two-Step RACH", 3GPP DRAFT; R1-1904993
PROCEDURES FOR TWO-STEP RACH, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE , vol. RAN WG1, no. Xi'an,
China; 20190408 - 20190412 7 April 2019
(2019-04-07), XP051700108, Retrieved from the
Internet:
URL:http://www.3gpp.org/ftp/Meetings%5F3GP
P%5FSYNC/RAN1/Docs/R1%2D1904993%2Ezip
[retrieved on 2019-04-07]
• ZTE: "Summary of 7.2.1.2 Procedure for Two-step
RACH", 3GPP DRAFT; R1-1903436 SUMMARY OF
7.2.1.2 PROCEDURES FOR TWO-STEP RACH,
3RD GENERATION PARTNERSHIP PROJECT
(3GPP), MOBILE COMPETENCE CENTRE ; 650,
ROUTE DES LUCIOLES ; F-06921
SOPHIA-ANTIPOLIS CEDEX ; , vol. RAN WG1, no.
Athens, Greece; 20190225 - 20190301 3 March
2019 (2019-03-03), XP051690820, Retrieved from
the Internet:
URL:http://www.3gpp.org/ftp/tsg%5Fran/WG1%
5FRL1/TSGR1%5F96/Docs/R1%2D1903436%2Ez
ip [retrieved on 2019-03-03]

- CAICT: "Considerations on Procedure for Two-step RACH", 3GPP DRAFT; R1-1905126, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Xi'an, China; 20190408 - 20190412 7 April 2019 (2019-04-07), XP051700207, Retrieved from the Internet: URL:http://www.3gpp.org/ftp/Meetings%5F3GP P%5FSYNC/RAN1/Docs/R1%2D1905126%2Ezip [retrieved on 2019-04-07]
- NOKIA ET AL: "On 2-step RACH Procedure", 3GPP DRAFT; R1-1904716 ON 2-STEP RACH PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Xi'an, China; 20190408 - 20190412 7 April 2019 (2019-04-07), XP051699900, Retrieved from the Internet: URL:http://www.3gpp.org/ftp/Meetings%5F3GP P%5FSYNC/RAN1/Docs/R1%2D1904716%2Ezip [retrieved on 2019-04-07]

**Description**

FIELD OF THE INVENTION

The present disclosure generally relates to communication networks, and more specifically, to method and apparatus for random access.

BACKGROUND

This section introduces aspects that may facilitate a better understanding of the disclosure. Accordingly, the statements of this section are to be read in this light and are not to be understood as admissions about what is in the prior art or what is not in the prior art.

Communication service providers and network operators have been continually facing challenges to deliver value and convenience to consumers by, for example, providing compelling network services and performance. With the rapid development of networking and communication technologies, wireless communication networks such as long-term evolution (LTE) and new radio (NR) networks are expected to achieve high traffic capacity and end-user data rate with lower latency. In order to connect to a network node, a random access (RA) procedure may be initiated for a terminal device. In the RA procedure, system information (SI) and synchronization signals (SS) as well as the related radio resource and transmission configuration can be informed to the terminal device by control information from the network node. The RA procedure can enable the terminal device to establish a session for a specific service with the network node. Thus, it is desirable to enhance the configuration and performance of the RA procedure.

Document "Procedures for Two-Step RACH", Qualcomm Incorporated, 3GPP draft, R1-1904993, discloses procedures related to two-step RACH, which target both licensed spectrum (FR1 and FR2) and unlicensed spectrum (FR1). The following proposals were made. Proposal 1: In order to operate two-step RACH in all RRC states and all cell sizes supported by NR Rel-15, the following design objectives should be satisfied: configurable waveform, MCS and contents should be supported in msgA transmission, wherein the payload can carry the equivalent content of msg3 in four-step RACH, UP data and piggybacked UCI; msgA should support preamble formats specified in NR for both small cells and large cells; msgB should enable the completion of two-step RACH procedure when both preamble and payload of msgA are correctly detected, or request re-transmission of payload on granted resources if msgA preamble detection is successful but msgA payload decoding fails. Proposal 2: Both separate and shared RO can be configured for two-step RACH. When a RO is shared between two-step RACH and four-step RACH, the pool of PRACH preambles can be partitioned into mutually exclusive subsets, which are used by different RACH procedures. FFS whether to augment the pool of preambles for shared RO, as well as the preamble allocation schemes for two-step RACH and four-step RACH on a shared RO. Proposal 3: The following designs for RO and PO should be supported: multiple POs can be configured per RO period, to accommodate different waveform, MCS and payload size; multiple two-step RACH UEs can share the same PO, if their msgA transmission use similar configurations for waveform/MCS/payload size; to simplify resource size specification for PO, PUSCH resource element in time-frequency domains can be defined; resource allocation for PO can be specified relative to RO, by semi-statically or dynamically configured offsets in time and/or frequency domain; constrained resource mapping can be configured for asynchronous msgA transmission with potentially large timing offset, wherein the corresponding RO and PO are adjacent in time and overlapping in frequency; it is beneficial to balance the resource allocations for RO and PO to achieve a good trade-off in resource utilization efficiency and collision probability. Proposal 4: Both UE-assisted timing adjustment and gNB-assisted timing adjustment can be applied to msgA transmission or reception: for UE-assisted timing adjustment, the UL timing offset estimation can be obtained from DL measurements; for gNB-assisted timing adjustment, the UL timing offset can be obtained at least from the msgA preamble processing. Proposal 5: The following designs for power control procedures can be considered for msgA transmission in two-step RACH: OLPC should be applied for msgA preamble and payload; power ramping procedures specified for msg1 in NR Rel-15 can be considered for msgA preamble/payload retransmission as well; different P0 targets, power ramping offsets and pathloss compensation schemes can be considered for preamble and payload; power control parameters for msgA payload can be dependent on the RRC state, bandwidth, payload size, traffic load and cell coverage; when msgA retransmissions are associated with beam switching, power ramping procedures should be considered jointly with beam switching procedures. Proposal 6: Two-step RACH can fallback to four-step RACH. The fallback procedures can be triggered by events such as timer expiration, counter overflow or partial detection of msgA. Proposal 7: Allow configurations in which UE can determine its UL beam for msgA preamble in the same manner as for four-step RACH, and use the same UL beam for both preamble and payload of msgA. Proposal 8: Allow configuration of POs with slot-repetition, and allow different repeated slots to use different transmit beams. Proposal 9: Allow UCI reporting in msgA.

SUMMARY

This summary is provided to introduce a selection of concepts in a simplified form that are further described below in the detailed description. The invention is defined by the appended claims.

A wireless communication network such as a NR/5G network may be able to support flexible network configuration. Various signaling approaches (e.g., a four-step approach, a two-step approach, etc.) may be used for a RA procedure of a terminal device to set up a connection with a network node. For the RA procedures using different signaling approaches, separate radio resources need to be configured so that a terminal device performing a RA procedure such as a four-step RA procedure can be distinguished from a terminal device performing another RA procedure such as a two-step RA procedure. For a RA procedure, there may be a specific association of signaling transmissions, for example, an association between a synchronization signal and physical broadcast channel block (which is also known as a SS/PBCH block or SSB for short) and a time-frequency physical random access channel (PRACH) occasion (which is also known as a RA occasion). It may be desirable to configure the association between signaling transmissions more flexibly and efficiently for different RA procedures.

Various embodiments of the present disclosure propose a solution for RA, which can support a flexible configuration for a RA procedure such as a two-step RA procedure, for example, by providing flexibility for the SSB to RA occasion and preamble mapping, so as to save signaling overhead while avoiding significant impact on other RA procedure such as a four-step RA procedure.

According to the present disclosure, methods, a network node, a terminal device and computer-readable media according to the independent claims are provided. Developments are set forth in the dependent claims.

It can be realized that the terms "random access occasion (RO)", "random access channel (RACH) occasion" or "PRACH occasion" mentioned herein may refer to a time-frequency resource usable for the preamble transmission in a RA procedure, which may also be referred to as "RA occasion". These terms may be used interchangeably in this document.

According to a first claimed aspect of the present disclosure, there is provided a method performed by a network node. The method comprises determining an association between a synchronization signal, SS, and physical broadcast channel, PBCH, block, SSB, and a random access, RA, occasion in a two-step RA procedure in which a preamble and a physical uplink shared channel, PUSCH, are transmitted respectively at the RA occasion and a PUSCH occasion in one message, based at least in part on whether RA resource is shared by the two-step RA procedure and a four-step RA procedure, and transmitting information indicating the association to a terminal device, wherein a RA occasion is shared by the two-step RA procedure and the four-step RA procedure, wherein the information indicating the association between the SSB and the RA occasion in the two-step RA procedure comprises a first parameter to indicate: a number of preambles mapped to an SSB for the two-step RA procedure, and wherein the preambles mapped to the SSB for the two-step RA procedure are configured by using at least a part of contention free preambles initially configured for the four-step RA procedure.

According to a second claimed aspect of the present disclosure, there is provided a method performed by a terminal device. The method comprises receiving, from a network node, information indicating an association between a synchronization signal, SS, and physical broadcast channel, PBCH, block, SSB, and a random access, RA, occasion in a two-step RA procedure in which a preamble and a physical uplink shared channel, PUSCH, are transmitted respectively at the RA occasion and a PUSCH occasion in one message, wherein the association is based at least in part on whether RA resource is shared by the two-step RA procedure and a four-step RA procedure, wherein a RA occasion is shared by the two-step RA procedure and the four-step RA procedure, wherein the information indicating the association between the SSB and the RA occasion in the two-step RA procedure comprises a first parameter to indicate: a number of preambles mapped to a SSB for the two-step RA procedure; and wherein the preambles mapped to the SSB for the two-step RA procedure are configured by using at least a part of contention free preambles initially configured for the four-step RA procedure.

According to a third claimed aspect of the present disclosure, there is provided a network node, comprising one or more processors and one or more memories comprising computer program codes. The one or more memories and the computer program codes are configured to, with the one or more processors, cause the network node to perform the method according to the first aspect.

According to a fourth claimed aspect of the present disclosure, there is provided a terminal device, comprising one or more processors and one or more memories comprising computer program codes. The one or more memories and the computer program codes are configured to, with the one or more processors, cause the terminal device to perform the method according to the second aspect.

According to a fifth claimed aspect of the present disclosure, there is provided a computer-readable medium having computer program codes embodied thereon for use with a computer. The computer program codes comprise codes for performing the method according to the first aspect.

According to a sixth claimed aspect of the present disclosure, there is provided a computer-readable medium having computer program codes embodied thereon for use with a computer. The computer program codes comprise codes for performing the method according to the second aspect.

Whenever in the following disclosure any of the above-stated aspects (corresponding to the independent claims) is disclosed as "optional" (e.g., due to usage of conjunctive terms, such as "can", "may", "should", etc.), it is nevertheless to be read as "mandatory".

BRIEF DESCRIPTION OF THE DRAWINGS

The disclosure itself, the preferable mode of use and further objectives are best understood by reference to the following detailed description of the embodiments when read in conjunction with the accompanying drawings, in which:

Fig.1A is a diagram illustrating an exemplary four-step RA procedure according to an example;
Fig.1B is a diagram illustrating an exemplary PRACH configuration according to an example;
Figs.1C-1D are diagrams illustrating examples of an association between an SSB and a PRACH occasion according to an example;
Fig.1E is a diagram illustrating an example of mapping between an SSB and RA preambles according to an example;
Fig.1F is a diagram illustrating exemplary preambles per SSB per PRACH occasion according to an example;
Fig.2 is a diagram illustrating an exemplary two-step RA procedure according to an example;
Figs.3A-3C are diagrams illustrating examples of preamble configuration for Option I according to an example;
Figs.3D-3F are diagrams illustrating examples of preamble configuration for Option II according to an example;
Fig.4 is a flowchart illustrating a method according to a claimed embodiment of the present disclosure;
Fig.5 is a flowchart illustrating another method according to a claimed embodiment of the present disclosure;
Fig.6 is a block diagram illustrating an apparatus according to a claimed embodiment of the present disclosure;
Fig.7 is a block diagram illustrating another apparatus according to an example;
Fig.8 is a block diagram illustrating yet another apparatus according to an example;
Fig.9 is a block diagram illustrating a telecommunication network connected via an intermediate network to a host computer according to an example;
Fig.10 is a block diagram illustrating a host computer communicating via a base station with a UE over a partially wireless connection according to an example;
Fig.11 is a flowchart illustrating a method implemented in a communication system according to an example;
Fig.12 is a flowchart illustrating a method implemented in a communication system according to an example;
Fig.13 is a flowchart illustrating a method implemented in a communication system according to an example; and
Fig.14 is a flowchart illustrating a method implemented in a communication system according to an example.

DETAILED DESCRIPTION

As used herein, the term "communication network" refers to a network following any suitable communication standards, such as new radio (NR), long term evolution (LTE), LTE-Advanced, wideband code division multiple access (WCDMA), highspeed packet access (HSPA), and so on. Furthermore, the communications between a terminal device and a network node in the communication network may be performed according to any suitable generation communication protocols, including, but not limited to, the first generation (1G), the second generation (2G), 2.5G, 2.75G, the third generation (3G), 4G, 4.5G, 5G communication protocols, and/or any other protocols either currently known or to be developed in the future.

The term "network node" refers to a network device in a communication network via which a terminal device accesses to the network and receives services therefrom. The network node may refer to a base station (BS), an access point (AP), a multi-cell/multicast coordination entity (MCE), a controller or any other suitable device in a wireless communication network. The BS may be, for example, a node B (NodeB or NB), an evolved NodeB (eNodeB or eNB), a next generation NodeB (gNodeB or gNB), a remote radio unit (RRU), a radio header (RH), a remote radio head (RRH), a relay, a low power node such as a femto, a pico, and so forth.

Yet further examples of the network node comprise multi-standard radio (MSR) radio equipment such as MSR BSs, network controllers such as radio network controllers (RNCs) or base station controllers (BSCs), base transceiver stations (BTSs), transmission points, transmission nodes, positioning nodes and/or the like. More generally, however, the network node may represent any suitable device (or group of devices) capable, configured, arranged, and/or operable to enable and/or provide a terminal device access to a wireless communication network or to provide some service to a terminal device that has accessed to the wireless communication network.

The term "terminal device" refers to any end device that can access a communication network and receive services therefrom. By way of example and not limitation, the terminal device may refer to a mobile terminal, a user equipment (UE), or other suitable devices. The UE may be, for example, a subscriber station, a portable subscriber station, a mobile station (MS) or an access terminal (AT). The terminal device may include, but not limited to, portable computers, image capture terminal devices such as digital cameras, gaming terminal devices, music storage and playback appliances, a mobile phone, a cellular phone, a smart phone, a tablet, a wearable device, a personal digital assistant (PDA), a vehicle, and the like.

As yet another specific example, in an Internet of things (IoT) scenario, a terminal device may also be called an IoT device and represent a machine or other device that performs monitoring, sensing and/or measurements etc., and transmits the results of such monitoring, sensing and/or measurements etc. to another terminal device and/or a network equipment. The terminal device may in this case be a machine-to-machine (M2M) device, which may in a 3rd generation partnership project (3GPP) context be referred to as a machine-type communication (MTC) device.

As one particular example, the terminal device may be a UE implementing the 3GPP narrow band Internet of things (NB-IoT) standard. Particular examples of such machines or devices are sensors, metering devices such as power meters, industrial machinery, or home or personal appliances, e.g. refrigerators, televisions, personal wearables such as watches etc. In other scenarios, a terminal device may represent a vehicle or other equipment, for example, a medical instrument that is capable of monitoring, sensing and/or reporting etc. on its operational status or other functions associated with its operation.

As used herein, the terms "first", "second" and so forth refer to different elements. The singular forms "a" and "an" are intended to include the plural forms as well, unless the context clearly indicates otherwise. The terms "comprises", "comprising", "has", "having", "includes" and/or "including" as used herein, specify the presence of stated features, elements, and/or components and the like, but do not preclude the presence or addition of one or more other features, elements, components and/or combinations thereof. The term "based on" is to be read as "based at least in part on". The term "one embodiment" and "an embodiment" are to be read as "at least one embodiment". The term "another embodiment" is to be read as "at least one other embodiment". Other definitions, explicit and implicit, may be included below.

Wireless communication networks are widely deployed to provide various telecommunication services such as voice, video, data, messaging and broadcasts. As described previously, in order to connect to a network node such as a gNB in a wireless communication network, a terminal device such as a UE may need to perform a RA procedure to exchange essential information and messages for communication link establishment with the network node.

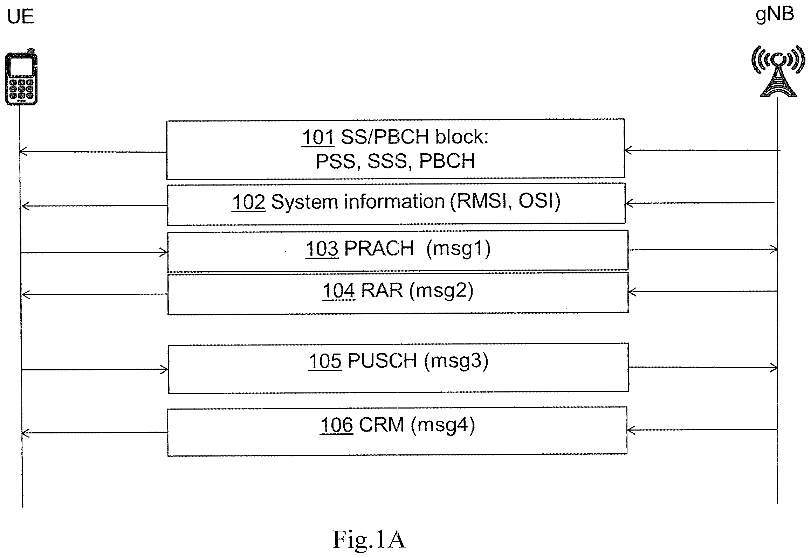

Fig.1A is a diagram illustrating an exemplary four-step RA procedure according to an embodiment of the present disclosure. As shown in Fig.1A, a UE can detect a synchronization signal (SS) by receiving 101 an SSB (e.g., a primary synchronization signal (PSS), a secondary synchronization signal (SSS), and physical broadcast channel (PBCH)) from a gNB. The UE can decode 102 some system information (e.g., remaining minimum system information (RMSI) and other system information (OSI)) broadcasted in the downlink (DL). Then the UE can transmit 103 a PRACH preamble (message 1/msg 1) in the uplink (UL). The gNB can reply 104 with a random access response (RAR, message2/msg2). In response to the RAR, the UE can transmit 105 the UE's identification information (message3/msg3) on physical uplink shared channel (PUSCH). Then the gNB can send 106 a contention resolution message (CRM, message4/msg4) to the UE.

In this exemplary procedure, the UE transmits message3/msg3 on PUSCH after receiving a timing advance command in the RAR, allowing message3/msg3 on PUSCH to be received with timing accuracy within a cyclic prefix (CP). Without this timing advance, a very large CP may be needed in order to be able to demodulate and detect message3/msg3 on PUSCH, unless the communication system is applied in a cell with very small distance between the UE and the gNB. Since a NR system can also support larger cells with a need for providing a timing advance command to the UE, the four-step approach is needed for the RA procedure.

In the NR system, the time and frequency resource on which a PRACH preamble is transmitted can be defined as a PRACH occasion. Different PRACH configuration schemes may be specified for FR1 (Frequency Range 1) paired spectrum, FR1 unpaired spectrum and FR2 (Frequency Range 2) with unpaired spectrum, respectively. The specified PRACH configuration can be maintained in a PRACH configuration table. The time resource and preamble format for PRACH transmission can be configured by a PRACH configuration index, which indicates a row in a PRACH configuration table. For example, at least part of PRACH configuration for preamble format 0 for FR1 unpaired spectrum is shown in Table 1.

Table 1

| PRACH Configuration Index | Preamble format | $n_{SFN}$ mod $x = y$ | | Subframe number | Starting symbol | Number of PRACH slots within a subframe | $N_t^{RA.slot}$, number of time-domain PRACH occasions within a PRACH slot | $N_{dur}^{RA}$, PRACH duration |
|---|---|---|---|---|---|---|---|---|
| | | $x$ | $y$ | | | | | |
| 0 | 0 | 16 | 1 | 9 | 0 | - | - | 0 |
| 1 | 0 | 8 | 1 | 9 | 0 | - | - | 0 |
| 2 | 0 | 4 | 1 | 9 | 0 | - | - | 0 |
| 3 | 0 | 2 | 0 | 9 | 0 | - | - | 0 |
| 4 | 0 | 2 | 1 | 9 | 0 | - | - | 0 |
| 5 | 0 | 2 | 0 | 4 | 0 | - | - | 0 |
| 6 | 0 | 2 | 1 | 4 | 0 | - | - | 0 |
| 7 | 0 | 1 | 0 | 9 | 0 | - | - | 0 |
| 8 | 0 | 1 | 0 | 8 | 0 | - | - | 0 |
| 9 | 0 | 1 | 0 | 7 | 0 | - | - | 0 |
| 10 | 0 | 1 | 0 | 6 | 0 | - | - | 0 |
| 11 | 0 | 1 | 0 | 5 | 0 | - | - | 0 |
| 12 | 0 | 1 | 0 | 4 | 0 | - | - | 0 |
| 13 | 0 | 1 | 0 | 3 | 0 | - | - | 0 |
| 14 | 0 | 1 | 0 | 2 | 0 | - | - | 0 |
| 15 | 0 | 1 | 0 | 1,6 | 0 | | | 0 |
| 16 | 0 | 1 | 0 | 1,6 | 7 | - | - | 0 |
| 17 | 0 | 1 | 0 | 4,9 | 0 | - | - | 0 |
| 18 | 0 | 1 | 0 | 3,8 | 0 | - | - | 0 |
| 19 | 0 | 1 | 0 | 2,7 | 0 | - | - | 0 |
| 20 | 0 | 1 | 0 | 8,9 | 0 | - | - | 0 |
| 21 | 0 | 1 | 0 | 4,8,9 | 0 | - | - | 0 |
| 22 | 0 | 1 | 0 | 3,4,9 | 0 | - | - | 0 |
| 23 | 0 | 1 | 0 | 7,8,9 | 0 | - | - | 0 |
| 24 | 0 | 1 | 0 | 3,4,8,9 | 0 | - | - | 0 |
| 25 | 0 | 1 | 0 | 6,7,8,9 | 0 | - | - | 0 |
| 26 | 0 | 1 | 0 | 1,4,6,9 | 0 | - | - | 0 |
| 27 | 0 | 1 | 0 | 1,3,5,7,9 | 0 | - | - | 0 |

In Table 1, the value of $x$ indicates the PRACH configuration period in number of system frames, and the value of $y$ indicates the system frame within each PRACH configuration period on which the PRACH occasions are configured. For instance, if $y$ is set to 0, then it means that PRACH occasions are only configured in the first frame of each PRACH configuration period. The value in the column "Subframe number" tells on which subframes PRACH occasions are configured. The value in the column "Starting symbol" is the symbol index.

In the case of time division duplexing (TDD), semi-statically configured DL parts and/or actually transmitted SSBs can override and invalidate some time-domain PRACH occasions defined in the PRACH configuration table. More specifically, PRACH occasions in the UL part are always valid, and a PRACH occasion within a certain part (e.g., a part with flexible symbols within a NR slot) is valid as long as it does not precede or collide with an SSB in the RACH slot and there are at least $N$ symbols after the DL part and the last symbol of an SSB. For example, $N$ may be set as 0 or 2, depending on the PRACH format and subcarrier spacing.

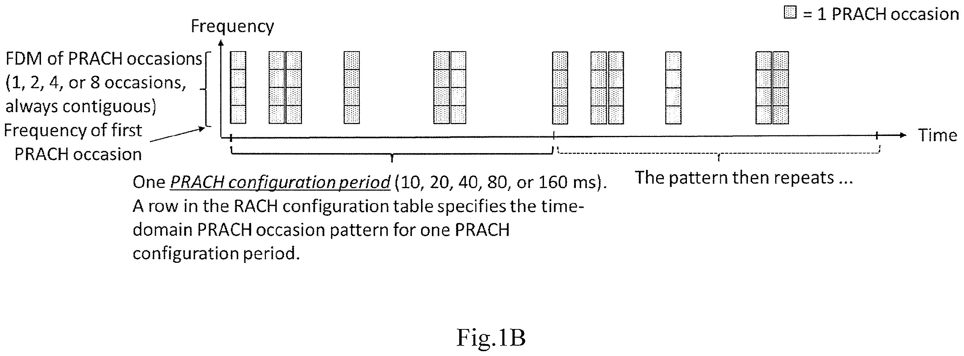

Fig.1B is a diagram illustrating an exemplary PRACH configuration according to an embodiment of the present disclosure. In the frequency domain, a NR system can support multiple frequency-multiplexed PRACH occasions on the same time-domain PRACH occasion. This is mainly motivated by the support of analog beam sweeping in the NR system such that the PRACH occasions associated to one SSB are configured at the same time instance but different frequency locations. As shown in Fig.1B, the number of PRACH occasions frequency-division multiplexed (FDMed) in one time domain PRACH occasion may be 1, 2, 4, or 8, and the PRACH configuration period may be 10ms, 20ms, 40ms, 80ms or 160ms. As mentioned previously, a row in a PRACH/RACH configuration table can specify the time-domain PRACH occasion pattern for one PRACH configuration period.

In accordance with an exemplary embodiment, there are up to 64 sequences that can be used as RA preambles per PRACH occasion in each cell. The radio resource control (RRC) parameter such as *totalNumberOfRA-Preambles* can be used to determine how many of these 64 sequences are used as RA preambles per PRACH occasion in each cell. The 64 sequences may be configured by including firstly all the available cyclic shifts of a root Zadoff-Chu sequence, and secondly in the order of increasing root index, until 64 preambles have been generated for the PRACH occasion.

According to some exemplary embodiments, there may be an association between an SSB and a PRACH occasion. For example, one-to-one association between an SSB and a PRACH occasion (e.g., one SSB per PRACH occasion) can be supported in the NR system. Similarly, one-to-many and/or many-to-one association between SSB(s) and PRACH occasion(s) can also be supported in the NR system.

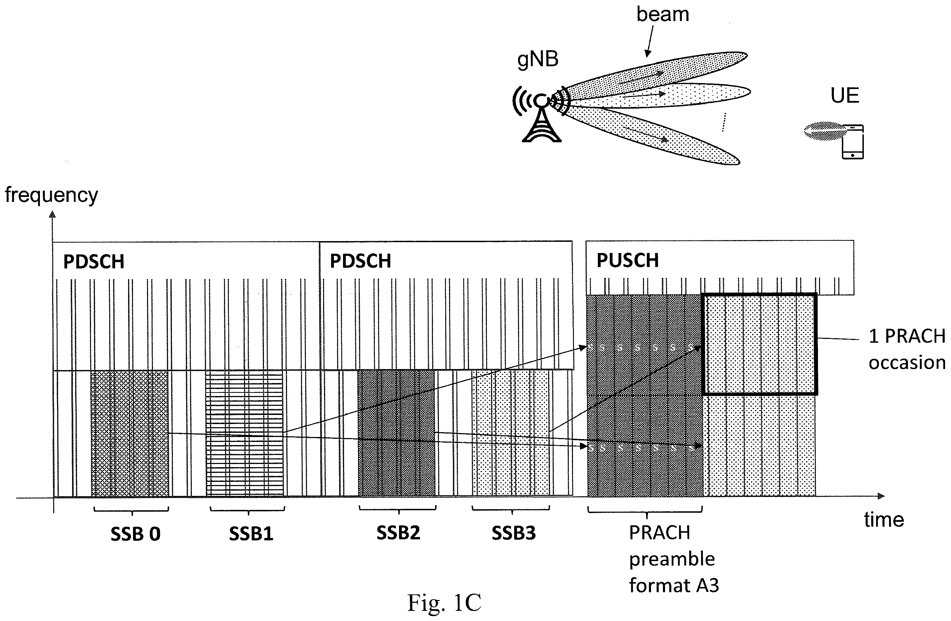

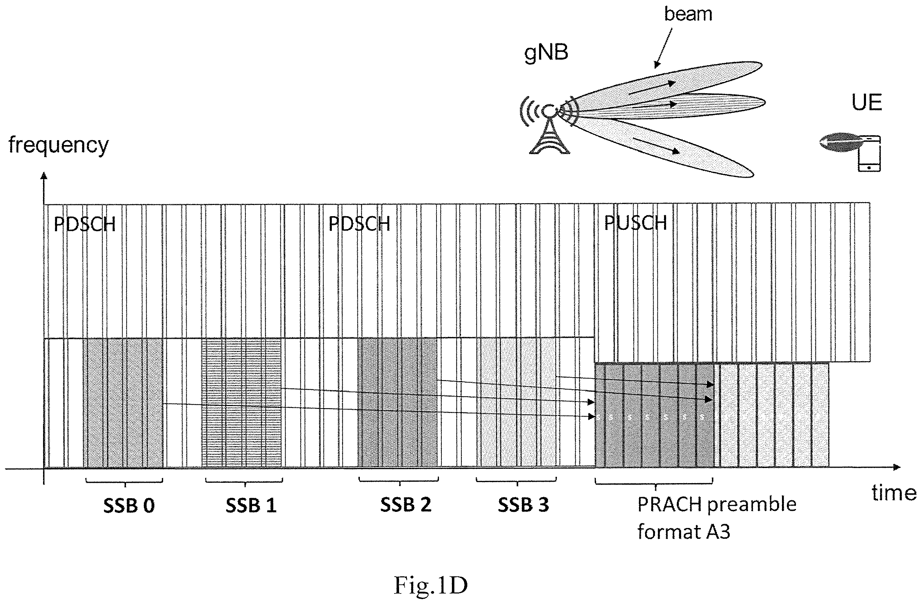

Figs.1C-1D are diagrams illustrating examples of an association between an SSB and a PRACH occasion according to some embodiments of the present disclosure. In the example of one SSB per PRACH occasion as shown in Fig.1C, SSB0, SSB1, SSB2 and SSB3 are associated with four different PRACH occasions, respectively. In the example of two SSBs per PRACH occasion as shown in Fig.1D, SSB0 and SSB1 are associated with a PRACH occasion, and SSB2 and SSB3 are associated with another PRACH occasion. It can be appreciated that the association between an SSB and a PRACH occasion as shown in Fig.1C or Fig.1D is just as an example, and other suitable association between an SSB and a PRACH occasion with a proper PRACH preamble format may also be implemented.

In accordance with an exemplary embodiment, a gNB can use different transmission beams to transmit the respective SSBs to a UE. In response to reception of the SSBs from the gNB, the UE can send PRACH preambles to the gNB in an associated PRACH occasion. According to the association between an SSB and a PRACH occasion and the mapping from an SSB to a transmission beam, the gNB can use the PRACH preambles received from the UE to determine its transmission beam preferred by the UE. The gNB can use the determined transmission beam in the DL transmission and optionally in the UL reception.

In accordance with some exemplary embodiments, the preambles associated to each SSB can be configured by two RRC parameters *ssb-perRACH-OccasionAndCB-PreamblesPerSSB* and *totalNumberOfRA-Preambles,* which may be indicated by an information element (IE) such as *RACH-ConfigCommon* in a system information block (e.g., SIB1). A specific rule may be defined for mapping an SSB to RA preambles. For example, a UE may be provided with a number $N$ of SSBs associated to one PRACH occasion and a number $R$ of contention based (CB) preambles per SSB per valid PRACH occasion by parameter *ssb-perRACH-OccasionAndCB-PreamblesPerSSB.* If $N<1$, one SSB is mapped to $1/N$ consecutive valid PRACH occasions and $R$ contention based preambles with consecutive indexes associated with the SSB per valid PRACH occasion start from preamble index 0. If $N \geq 1$, $R$ contention based preambles with consecutive indexes associated with SSB $n,\ 0 \leq n \leq N$ - 1, per valid PRACH occasion start from preamble index

$$n \cdot N_{\text{preamble}}^{\text{total}} \Big/ N$$, where $N_{\text{preamble}}^{\text{total}}$ is provided by parameter *totalNumberOfRA-Preambles* and is an integer multiple of $N$.

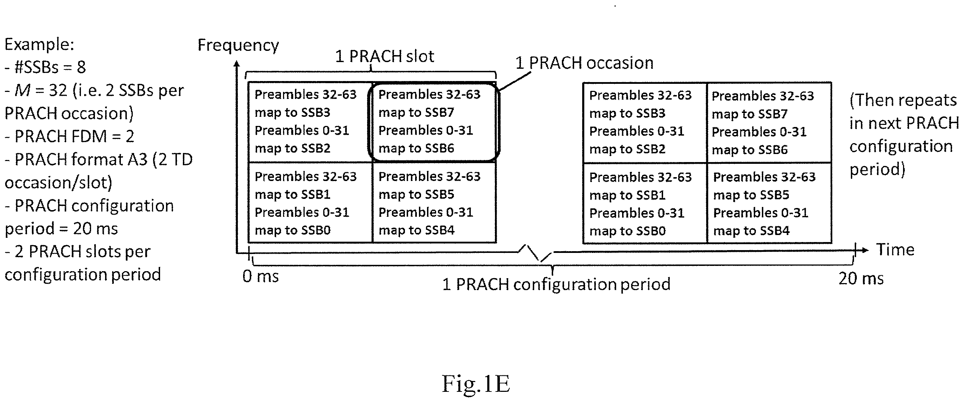

Fig.1E is a diagram illustrating an example of mapping between an SSB and RA preambles according to an embodiment of the present disclosure. In this example, the number of PRACH slots in one PRACH configuration period is 2, the number of PRACH occasions in one PRACH slot is 4, and the number of SSBs in one PRACH occasion is 2. As shown in Fig.1E, the mapping between an SSB and PRACH preambles may be done by consecutively associating

$M$ preambles to each SSB, where $$M = N_{\text{preamble}}^{\text{total}} \Big/ N$$. For instance, the preambles can be taken as follows:

- first, in increasing order of preamble indexes within a single PRACH occasion;

- second, in increasing order of frequency resource indexes for frequency multiplexed PRACH occasions; and

- third, in increasing order of time.

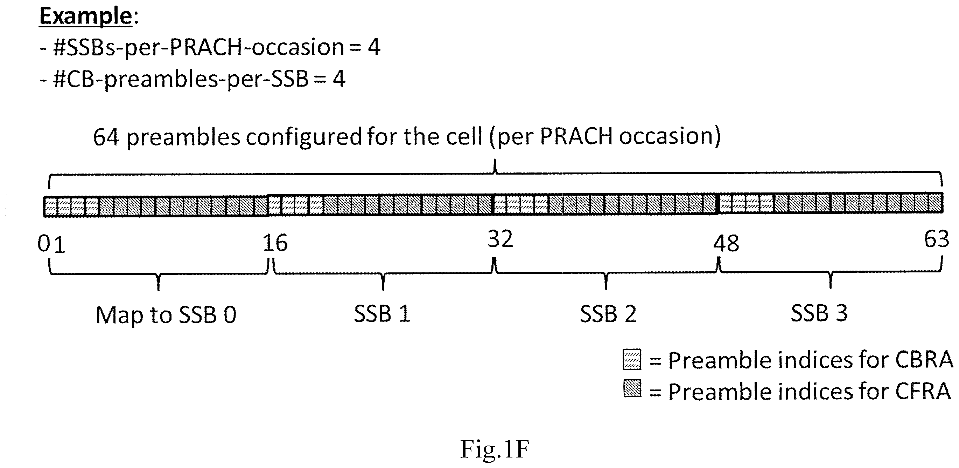

Fig.1F is a diagram illustrating exemplary preambles per SSB per PRACH occasion according to an embodiment of the present disclosure. In this embodiment, for each SSB, the associated preambles per PRACH occasion are further divided into two sets for contention based random access (CBRA) and contention free random access (CFRA). The number of contention based (CB) preambles per SSB per PRACH occasion may be signaled by a RRC parameter such as *CB-preambles-per-SSB*. Preamble indices for CBRA and CFRA are mapped consecutively for one SSB in one PRACH occasion, as shown in Fig.1F.

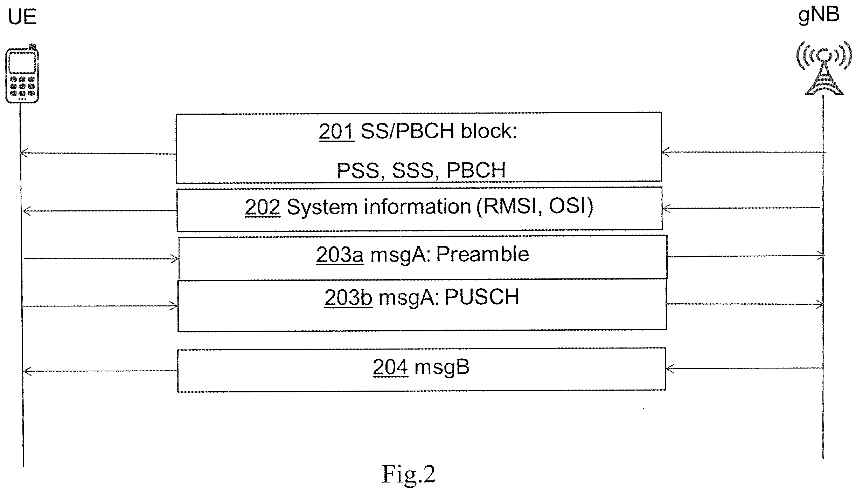

Fig.2 is a diagram illustrating an exemplary two-step RA procedure according to an embodiment of the present disclosure. Similar to the procedure as shown in Fig.1A, in the procedure shown in Fig.2, a UE can detect a SS by receiving 201 an SSB (e.g., comprising a PSS, a SSS and PBCH) from a gNB, and decode 202 system information (e.g., remaining minimum system information (RMSI) and other system information (OSI)) broadcasted in the DL. Compared to the four-step approach as shown in Fig.1A, the UE performing the procedure in Fig.2 can complete random access in only two steps. Firstly, the UE sends 203a/203b to the gNB a message A (msgA) including RA preamble together with higher layer data such as a RRC connection request possibly with some payload on PUSCH. Secondly, the gNB sends 204 to the UE a RAR (also called message B or msgB) including UE identifier assignment, timing advance information, a contention resolution message, and etc.

In the two-step RA procedure, the preamble and msgA PUSCH can be transmitted by the UE in one message called message A. Separate PRACH resources (defined by PRACH occasions and preamble sequences) can be configured for the two-step RA procedure and the four-step RA procedure so that the network can distinguish the legacy UEs performing the four-step RA procedure from the UEs performing the two-step RA procedure.

Some agreement may be made regarding PRACH configuration for two-step RA. Considering the relation of PRACH resources between two-step RA and four-step RA, the network may have the flexibility to configure the following options:

• Option I: separate PRACH occasions for two-step RA and four-step RA; and

• Option II: shared PRACH occasion but separate preambles for two-step RA and four-step RA.

For the four-step RA procedure, the SSB to PRACH occasion and preamble mapping is described in connection with Figs.1C-1F. For the two-step RA procedure, it may be desirable to map an SSB to a PRACH occasion and the corresponding preambles adaptively, according to the selected option (e.g., Option I or Option II) for PRACH configuration.

In the proposed solution according to some exemplary embodiments, a network node can indicate an association between signaling transmissions for a two-step RA procedure to a terminal device. In accordance with an exemplary embodiment, the proposed solution may allow a gNB to inform a UE of the SSB to PRACH occasion mapping for a two-step RA procedure. Optionally, the legacy SSB to PRACH occasion and preamble mapping for the four-step RA procedure can be utilized, reused or simply revised for the two-step RA procedure, so as to minimize signaling overhead while providing the flexibility for the SSB to PRACH occasion and preamble mapping without impact on the legacy four-step RA procedure.

In accordance with some exemplary embodiments, an association between DL and UL transmissions may be adaptive to a relation between RA occasion configuration schemes for different RA procedures. For example, in the case of Option I where separate PRACH occasions are configured for two-step RA and four-step RA, the SSB to PRACH occasion and preamble mapping rule used for two-step RA can also be used for four-step RA. Alternatively, separate configuration rules for the SSB to PRACH occasion and preamble mapping may be introduced for two-step RA and four-step RA. Alternatively, in the case of Option II where a shared PRACH occasion is configured for two-step RA and four-step RA, the SSB to PRACH occasion and preamble mapping rule used for two-step RA may be defined based at least in part on the rule used for four-step RA.

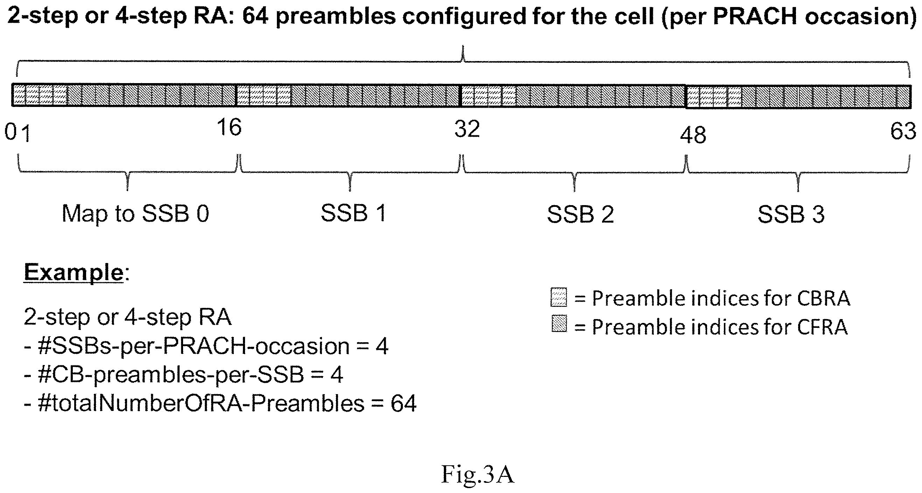

Figs.3A-3C are diagrams illustrating examples of preamble configuration for Option I according to some embodiments of the present disclosure. In the case of Option I, PRACH occasions are separately configured for two-step RA and four-step RA. In accordance with some exemplary embodiments, the same preamble configuration may be used for two-step RA and four-step RA. For example, the preamble configuration may indicate that 16 out of the total 64 preambles are configured for CBRA, where the number of SSBs mapped to a PRACH occasion is 4, as shown in Fig.3A. According to an exemplary embodiment, some configuration parameters such as *ssb-perRACH-OccasionAndCB-PreamblesPerSSB* and *totalNumberOfRA-Preambles* may be used for both of two-step RA and four-step RA. In this case, no extra signaling is needed by the network to additionally indicate the preamble configuration for two-step RA. Optionally, the parameter *totalNumberOfRA-Preambles* can be ignored or skipped if no CFRA is supported for two-step RA.

**EP 3 959 938 B1**

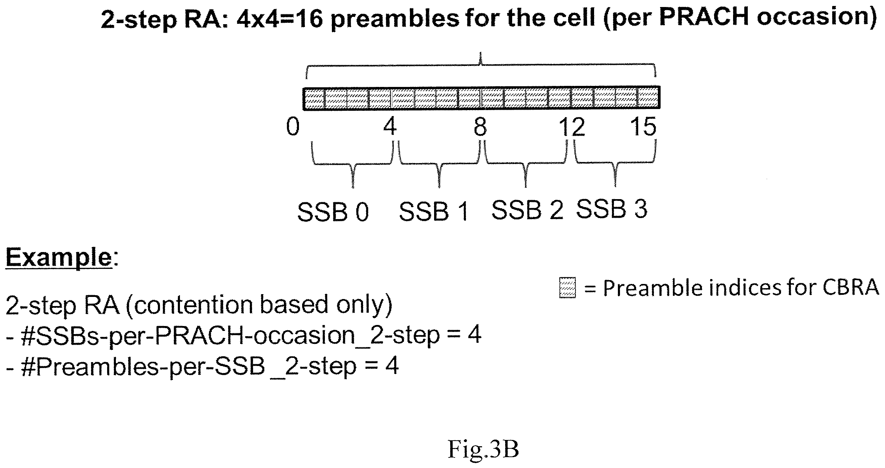

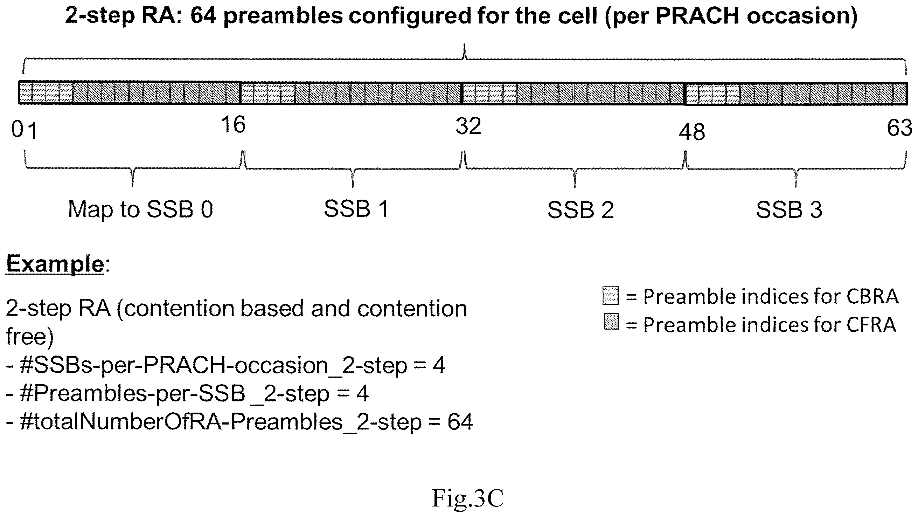

In accordance with some exemplary embodiments, separate preamble configuration may be introduced for two-step RA, as shown in Fig.3B and Fig.3C. According to an exemplary embodiment, the preamble configuration for two-step RA may be indicated by one or more predefined parameters. For example, a parameter *ssb-perRACH-OccasionAndCB-PreamblesPerSSB-2Step* can be defined to indicate the number of SSBs mapped to a PRACH occasion for two-step RA and the number of CB preambles for two-step RA mapped to an SSB. In the example of Fig.3B, 16 preambles are separately configured for CBRA in a PRACH occasion for two-step RA.

Optionally, another parameter *totalNumberOfRA-Preambles-2Step* can be defined to indicate the total number of preambles used for both CBRA and CFRA in two-step RA. In the example of Fig.3C, 16 out of the total 64 preambles are configured for CBRA for two-step RA, and the rest can be used for CFRA if supported.

In accordance with some exemplary embodiments, the CFRA may not be expected to be supported for two-step RA. In this case, the parameter *totalNumberOfRA-Preambles-2Step* can be used for CBRA via making sure that the total number of preambles for the CBRA is the same as the value of the parameter *totalNumberOfRA-Preambles-2Step.* Optionally, the parameter *totalNumberOfRA-Preambles-2Step* may not be necessary, and the parameter *ssb-perRACH-OccasionAndCB-PreamblesPerSSB-2Step* can be used to determine the total number of preambles used for two-step RA.

It will be realized that parameters, variables and settings related to the signaling transmission and resource allocation described herein are just examples. Other suitable message settings, the associated configuration parameters and the specific values thereof may also be applicable to implement the proposed methods.

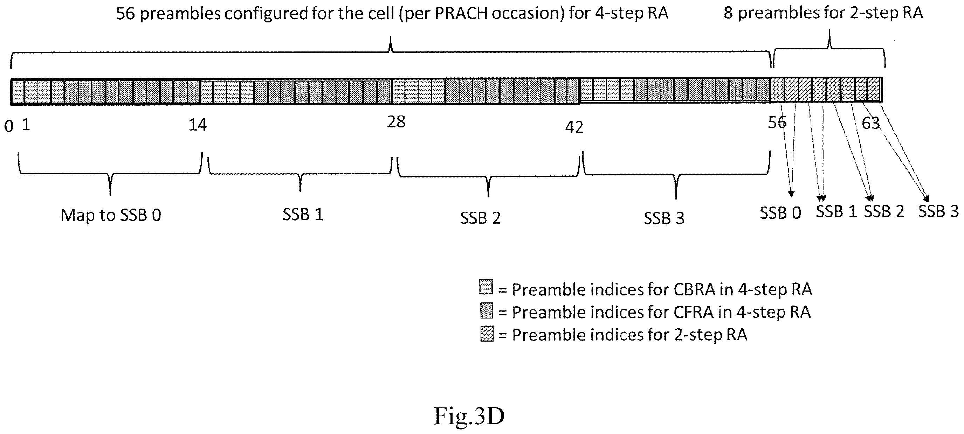

Figs.3D-3F are diagrams illustrating examples of preamble configuration for Option II according to some embodiments of the present disclosure. In the case of Option II, a PRACH occasion can be shared by two-step RA and four-step RA. According to some exemplary embodiments, separate preambles may be configured for two-step RA and four-step RA. For example, the preambles for four-step RA per PRACH occasion may be configured such that the value of the four-step RA parameter *totalNumberOfRA-Preambles* is less than the maximum number of preambles per PRACH occasion (e.g., *MaxNumberOfRA-Preambles* = 64), and the rest preambles (e.g., 64 - *totalNumberOfRA-Preambles*) may be used as the preambles for 2-step RA per PRACH occasion. Optionally, configuration of the SSB to PRACH occasion mapping may be provisioned separately for two-step RA and four-step RA. In this case, the number of SSBs mapped to a PRACH occasion for two-step RA (which may be indicated by a parameter such as *ssb-perRACH-Occasion-2Step*) may be the same as or different from the number of SSBs mapped to a PRACH occasion for four-step RA. In the example of Fig.3D, the preambles per PRACH occasion are divided for two-step RA and four-step RA, where the number of preambles configured for four-step RA is indicated by the parameter *totalNumberOfRA-Preambles* = 56, and the rest 8 preambles are used for two-step RA, with 2 preambles per SSB.

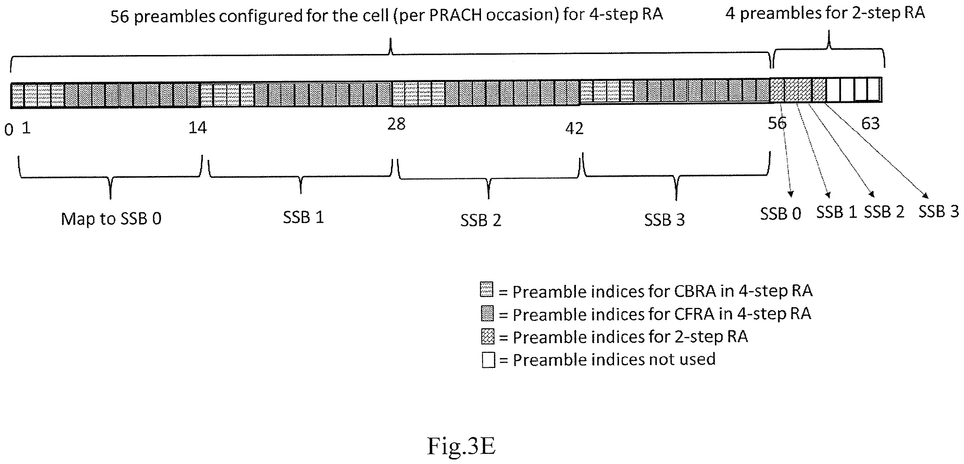

In accordance with some exemplary embodiments, a separate parameter for two-step RA (e.g., *totalNumberOfRA-Preambles-2step*) may be introduced to indicate the number of preambles for two-step RA in a PRACH occasion. Optionally, the preambles for four-step RA per PRACH occasion may be configured such that *totalNumberOfRA-Preambles < MaxNumberOfRA-Preambles,* and the preambles for two-step RA per PRACH occasion may be configured such that *totalNumberOfRA-Preambles-2step < MaxNumberOfRA-Preambles - totalNumberOfRA-Preambles.* In this case, a subset of the rest preambles *(MaxNumberOfRA-Preambles - totalNumberOfRA-Preambles)* are used as the preambles for two-step RA per PRACH occasion, and the remaining preamble(s) may be reserved and not used for RA. Thus, some preambles per PRACH occasion may be used for four-step RA, some may be used for two-step RA, and some may be reserved. In the example of Fig.3E, the number of preambles configured in a PRACH occasion is *MaxNumberOfRA-Preambles* = 64, the number of preambles configured for four-step RA is *totalNumberOfRA-Preambles* = 56, the number of preambles configured for two-step RA is *totalNumberOfRA-Preambles-2step* = 4, and the rest 4 preambles are reserved and not used for RA.

In accordance with some exemplary embodiments, the number of preambles used for both two-step RA and four-step RA per PRACH occasion may be indicated by a parameter such as *totalNumberOfRA-Preambles* if it is configured. A separate parameter such as *CB-preambles-per-SSB-2step* may be introduced to indicate the number of CB preambles per SSB for two-step RA, such that the sum of the CB preambles configured for both two-step RA and four-step RA per PRACH occasion is less than or equal to the value of the parameter *MaxNumberOfRA-Preambles,* or is less than or equal to the value of the parameter *totalNumberOfRA-Preambles* if it is configured.

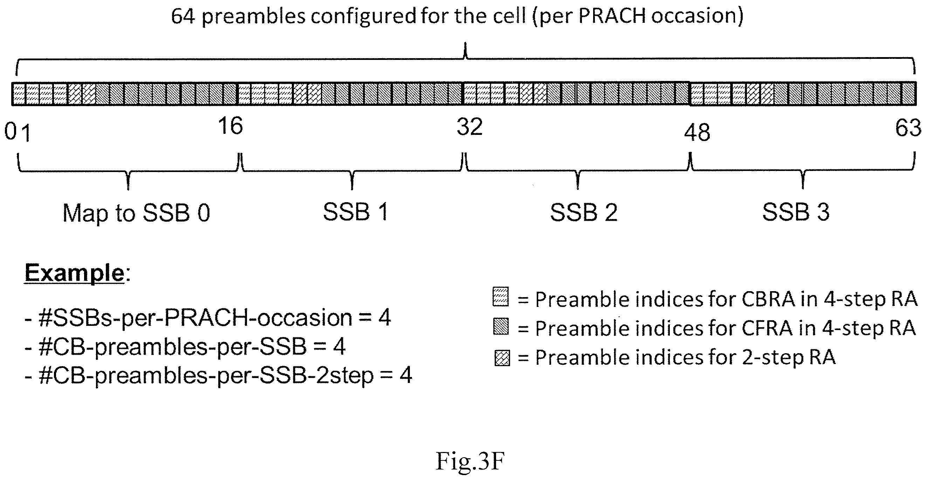

Optionally, a part of the CFRA preambles initially usable for four-step RA may be configured as the preambles for two-step RA. In this case, a network node such as a gNB needs to avoid using these preambles for four-step CFRA. This can be done, for example via network implementation, or by specifying a rule that the preambles configured or reused for two-step RA (e.g., by defining a parameter such as *CB-preambles-per-SSB-2step*) are not valid for four-step CFRA. In the example of Fig.3F, the number of preambles configured for both two-step RA and four-step RA per PRACH occasion is 64, the number of CBRA preambles configured for four-step RA per SSB per PRACH occasion is *CB-preambles-per-SSB* = 4, the number of CBRA preambles configured for two-step RA per SSB per PRACH occasion is *CB-preambles-per-SSB-2step* = 2, and the rest preambles are for CFRA.

It is noted that some embodiments of the present disclosure are mainly described in relation to 5G or NR

**10**

specifications being used as non-limiting examples for certain exemplary network configurations and system deployments. As such, the description of exemplary embodiments given herein specifically refers to terminology which is directly related thereto. Such terminology is only used in the context of the presented non-limiting examples and embodiments, and does naturally not limit the present disclosure in any way. Rather, any other system configuration or radio technologies may equally be utilized as long as exemplary embodiments described herein are applicable.

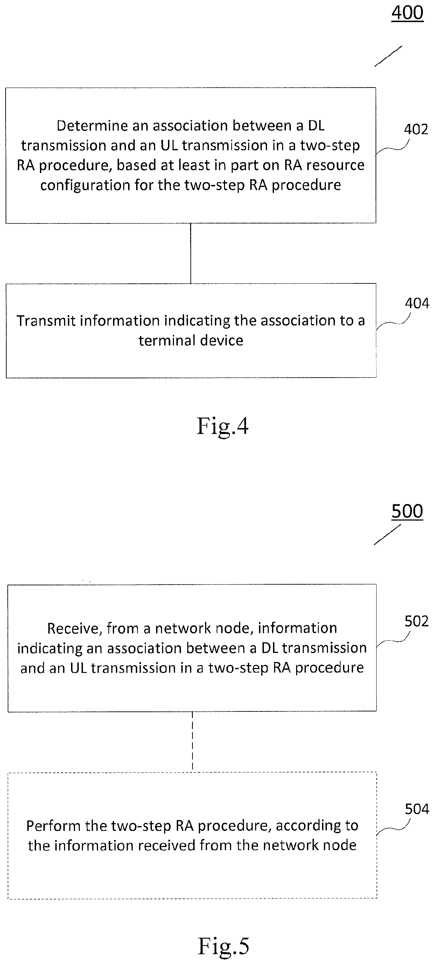

Fig.4 is a flowchart illustrating a claimed method 400. The method 400 illustrated in Fig.4 is performed by a network node or an apparatus communicatively coupled to the network node. In accordance with an exemplary embodiment, the network node may comprise a base station such as gNB. The network node is configured to communicate with one or more terminal devices such as UEs which is able to support one or more RA approaches such as two-step RA and/or four-step RA.

According to the exemplary method 400 illustrated in Fig.4, the network node determines an association between a DL transmission and an UL transmission (e.g., an association between an SSB and a RA occasion, etc.) in a two-step RA procedure, based at least in part on RA resource configuration for the two-step RA procedure (e.g., based at least in part on whether RA resource is shared by the two-step RA procedure and a four-step RA procedure), as shown in block 402. As described with respect to Fig.2, in the two-step RA procedure, a preamble and a PUSCH are transmitted respectively at the RA occasion and a PUSCH occasion in one message (e.g. msgA, etc.). Then the network node transmits information indicating the association to a terminal device, as shown in block 404. For example, the information indicating the association may be carried in a broadcast information block (such as SIB1) transmitted to the terminal device from the network node. Optionally, the terminal device may use the information indicating the association between the SSB and the RA occasion in the two-step RA procedure to implement accessing to the network node.

In accordance with some exemplary embodiments, the association between the DL transmission and the UL transmission may comprise an association between an SSB and a RA occasion, and/or other association reflecting signaling transmission/resource allocation for the two-step RA procedure. In an exemplary embodiment, the association between the SSB and the RA occasion may comprise mapping of the SSB to one or more preambles in the RA occasion.

Fig.5 is a flowchart illustrating a claimed method 500. The method 500 illustrated in Fig.5 is performed by a terminal device or an apparatus communicatively coupled to the terminal device. In accordance with an exemplary embodiment, the terminal device such as a UE is configured to communicate with a network node such as a gNB by supporting one or more RA approaches such as two-step RA and/or four-step RA.

According to the exemplary method 500 illustrated in Fig.5, the terminal device receives, from a network node (such as the network node described with respect to Fig.4), information indicating an association between a DL transmission and an UL transmission (e.g., an association between an SSB and a RA occasion) in a two-step RA procedure, as shown in block 502. The association is based at least in part on RA resource configuration for the two-step RA procedure (e.g., based at least in part on whether RA resource is shared by the two-step RA procedure and a four-step RA procedure). Optionally, the terminal device may perform the two-step RA procedure, according to the information received from the network node, as shown in block 504.

In accordance with some exemplary embodiments, the association between the SSB and the RA occasion in the two-step RA procedure may be further based on RA resource configuration (e.g. RA occasion configuration and optionally RA preamble configuration, etc.) for a four-step RA procedure. In an embodiment, the RA resource may comprise a RA occasion and/or one or more associated RA preambles.

In accordance with some exemplary embodiments, the RA resource available for the two-step RA procedure may be separate from the RA resource available for the four-step RA procedure. In this case, the two-step RA procedure and the four-step RA procedure may not share the RA resource. In an embodiment, the RA occasion for the two-step RA procedure may be separate from a RA occasion for the four-step RA procedure. According to an exemplary embodiment, the association between the SSB and the RA occasion in the two-step RA procedure may be the same as an association between an SSB and an RA occasion in the four-step RA procedure (e.g., the SSB to RA occasion mapping applicable for both two-step RA and four-step RA as shown in Fig.3A). In an embodiment, the information indicating the association between the SSB and the RA occasion in the two-step RA procedure can also indicate the association between the SSB and the RA occasion in the four-step RA procedure. Thus, some existing parameters defined for the four-step RA procedure can also be used for the two-step RA procedure.

In accordance with some exemplary embodiments, the association between the SSB and the RA occasion in the two-step RA procedure may be different from an association between the SSB and the RA occasion in the four-step RA procedure. In this case, the information indicating the association between the SSB and the RA occasion in the two-step RA procedure may comprise a first parameter (such as *ssb-perRACH-OccasionAndCB-PreamblesPerSSB-2Step* described with respect to Fig.3B) to indicate:

- a number of SSBs mapped to a RA occasion for the two-step RA procedure; and

- a number of preambles mapped to an SSB for the two-step RA procedure.

According to an exemplary embodiment, the information indicating the association between the SSB and the RA occasion in the two-step RA procedure may further comprise a second parameter (such as *totalNumberOfRA-Preambles-2Step* described with respect to Fig.3C) to indicate:

- a number of preambles in the RA occasion for the two-step RA procedure.

The preambles in the RA occasion for the two-step RA procedure may comprise CB preambles (e.g., CBRA preambles as shown in Fig.3C). Optionally, the preambles in the RA occasion for the two-step RA procedure may further comprise CF preambles (e.g., CFRA preambles as shown in Fig.3C).

In accordance with some exemplary embodiments, the RA resource available for the two-step RA procedure may be shared by the four-step RA procedure. In an embodiment, a RA occasion may be shared by the two-step RA procedure and the four-step RA procedure. In this case, the shared RA occasion may be configured with separate preambles for the two-step RA procedure and the four-step RA procedure (e.g., the preamble configuration as shown in Fig.3D-Fig.3F). In an embodiment, the shared RA occasion may be configured with at least one reserved preamble (e.g., the preamble configuration as shown in Fig.3E).

In accordance with some exemplary embodiments, the information indicating the association between the SSB and the RA occasion in the two-step RA procedure may comprise a third parameter (such as *ssb-perRACH-Occasion-2Step* described with respect to Fig.3D) to indicate:

- a number of SSBs mapped, for the two-step RA procedure, to the shared RA occasion.

According to an exemplary embodiment, the third parameter may be usable to determine a number of preambles mapped to an SSB for the two-step RA procedure. For example, the number of preambles mapped to an SSB for the two-step RA procedure can be determined by (*MaxNumberOfRA-Preambles - totalNumberOfRA-Preambles) / ssb-perRACH-Occasion-2Step,* as described in connection with Fig.3D.

In accordance with some exemplary embodiments, the information indicating the association between the SSB and the RA occasion in the two-step RA procedure may comprise a fourth parameter (such as *totalNumberOfRA-Preambles-2step* described with respect to Fig.3E) to indicate:

- a number of preambles for the two-step RA procedure configured in the shared RA occasion.

In accordance with a claimed embodiment, the information indicating the association between the SSB and the RA occasion in the two-step RA procedure may comprise a fifth parameter (such as *CB-preambles-per-SSB-2step* described with respect to Fig.3E and Fig.3F) to indicate:

- a number of preambles mapped to an SSB for the two-step RA procedure.

In accordance with some exemplary embodiments, the information indicating the association between the SSB and the RA occasion in the two-step RA procedure may further comprise a sixth parameter (such as *totalNumberOfRA-Preambles* described with respect to Fig.3F) to indicate:

- a total number of preambles for the two-step RA procedure and the four-step RA procedure in the shared RA occasion.

In accordance with a claimed embodiment, the preambles mapped to the SSB for the two-step RA procedure are configured by using at least a part of CF preambles initially configured for the four-step RA procedure. In this way, some of preambles initially configured for the four-step RA procedure are reused for the two-step RA procedure. Optionally, the two-step RA procedure and the four-step RA procedure may be configured with the same association between an SSB and the shared RA occasion (e.g., the preamble configuration as shown in Fig.3F).

The proposed solution according to one or more exemplary embodiments can enable an UL transmission to be associated with a DL transmission based at least in part on a specified configuration rule for a RA procedure such as a two-step RA procedure. In accordance with a claimed embodiment, the association between the SSB and the RA occasion (e.g., the SSB to RA occasion and msgA preamble mapping) for the two-step RA procedure is determined according to a relation between RA resource (e.g., RA occasion) configuration for the two-step RA procedure and RA resource configuration for a four-step procedure (e.g., according to whether the RA resource is shared by the two-step RA procedure and the four-step RA procedure). The configuration rule and parameters of the SSB to RA occasion mapping for the four-step RA procedure may be utilized at least partly to form the configuration rule and parameters of the SSB to RA occasion mapping for the two-step RA procedure, so as to improve flexibility of transmission configuration and enhance resource utilization.

The various blocks shown in Figs.4-5 are viewed as method steps, and/or as operations that result from operation of computer program code, and/or as a plurality of coupled logic circuit elements constructed to carry out the associated function(s). The schematic flow chart diagrams described above are generally set forth as logical flow chart diagrams. As such, the depicted order and labeled steps are indicative of specific embodiments of the presented methods. Other steps and methods may be conceived that are equivalent in function, logic, or effect to one or more steps, or portions thereof, of the illustrated methods. Additionally, the order in which a particular method occurs may or may not strictly adhere to the order of the corresponding steps shown.

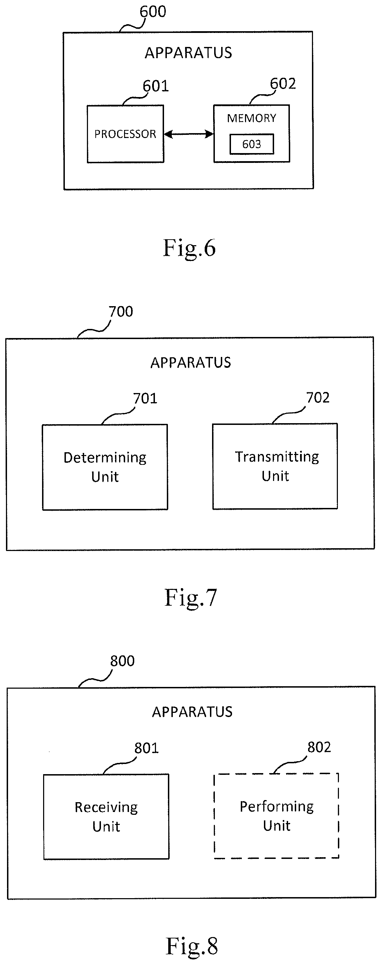

Fig.6 is a block diagram illustrating a claimed apparatus 600. As shown in Fig.6, the apparatus 600 comprises one or more processors such as processor 601 and one or more memories such as memory 602 storing computer program codes 603. The memory 602 may be non-transitory machine/processor/computer readable storage medium. In accordance with some exemplary embodiments, the apparatus 600 may be implemented as an integrated circuit chip or module that can be plugged or installed into a network node as described with respect to Fig.4, or a terminal device as described with respect to Fig.5. In such case, the apparatus 600 is implemented as a network node as described with respect to Fig.4, or a terminal device as described with respect to Fig.5.

In a claimed implementation, the one or more memories 602 and the computer program codes 603 are configured to, with the one or more processors 601, cause the apparatus 600 at least to perform any operation of the method as described in connection with Fig.4. In other implementations, the one or more memories 602 and the computer program codes 603 are configured to, with the one or more processors 601, cause the apparatus 600 at least to perform any operation of the method as described in connection with Fig.5. Alternatively or additionally, the one or more memories 602 and the computer program codes 603 may be configured to, with the one or more processors 601, cause the apparatus 600 at least to perform more or less operations to implement the proposed methods according to the exemplary embodiments of the present disclosure.

Fig.7 is a block diagram illustrating an apparatus 700 according to some embodiments of the present disclosure. As shown in Fig.7, the apparatus 700 may comprise a determining unit 701 and a transmitting unit 702. In an exemplary embodiment, the apparatus 700 may be implemented in a network node such as a gNB. The determining unit 701 may be operable to carry out the operation in block 402, and the transmitting unit 702 may be operable to carry out the operation in block 404. Optionally, the determining unit 701 and/or the transmitting unit 702 may be operable to carry out more or less operations to implement the proposed methods according to the exemplary embodiments of the present disclosure.

Fig.8 is a block diagram illustrating an apparatus 800 according to some embodiments of the present disclosure. As shown in Fig.8, the apparatus 800 may comprise a receiving unit 801, and optionally a performing unit 802. In an exemplary embodiment, the apparatus 800 may be implemented in a terminal device such as a UE. The receiving unit 801 may be operable to carry out the operation in block 502, and the performing unit 802 may be operable to carry out the operation in block 504. Optionally, the receiving unit 801 and/or the performing unit 802 may be operable to carry out more or less operations to implement the proposed methods according to the exemplary embodiments of the present disclosure.

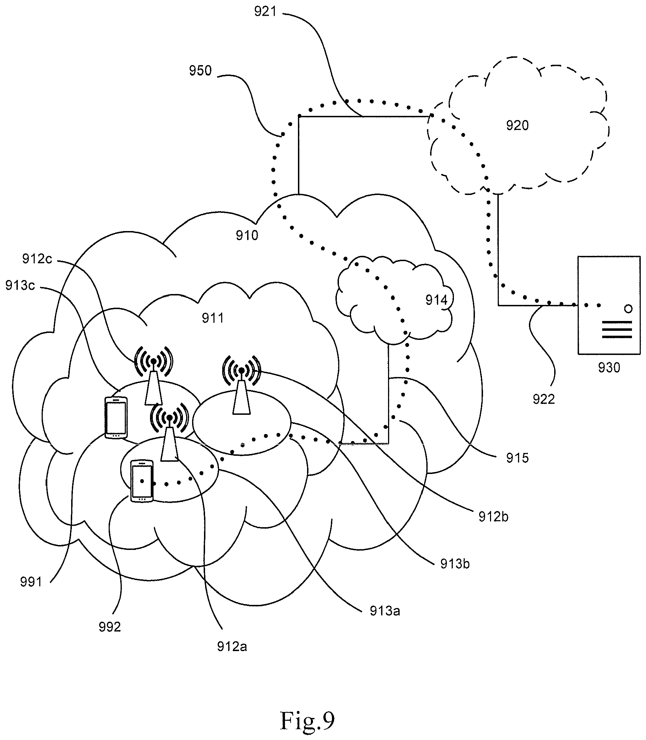

Fig.9 is a block diagram illustrating a telecommunication network connected via an intermediate network to a host computer in accordance with some embodiments of the present disclosure.

With reference to Fig.9, in accordance with an embodiment, a communication system includes a telecommunication network 910, such as a 3GPP-type cellular network, which comprises an access network 911, such as a radio access network, and a core network 914. The access network 911 comprises a plurality of base stations 912a, 912b, 912c, such as NBs, eNBs, gNBs or other types of wireless access points, each defining a corresponding coverage area 913a, 913b, 913c. Each base station 912a, 912b, 912c is connectable to the core network 914 over a wired or wireless connection 915. A first UE 991 located in a coverage area 913c is configured to wirelessly connect to, or be paged by, the corresponding base station 912c. A second UE 992 in a coverage area 913a is wirelessly connectable to the corresponding base station 912a. While a plurality of UEs 991, 992 are illustrated in this example, the disclosed embodiments are equally applicable to a situation where a sole UE is in the coverage area or where a sole UE is connecting to the corresponding base station 912.

The telecommunication network 910 is itself connected to a host computer 930, which may be embodied in the hardware and/or software of a standalone server, a cloud-implemented server, a distributed server or as processing resources in a server farm. The host computer 930 may be under the ownership or control of a service provider, or may be operated by the service provider or on behalf of the service provider. Connections 921 and 922 between the telecommunication network 910 and the host computer 930 may extend directly from the core network 914 to the host computer 930 or may go via an optional intermediate network 920. An intermediate network 920 may be one of, or a combination of more than one of, a public, private or hosted network; the intermediate network 920, if any, may be a backbone network or the Internet; in particular, the intermediate network 920 may comprise two or more sub-networks (not shown).

The communication system of Fig.9 as a whole enables connectivity between the connected UEs 991, 992 and the host computer 930. The connectivity may be described as an over-the-top (OTT) connection 950. The host computer 930 and the connected UEs 991, 992 are configured to communicate data and/or signaling via the OTT connection 950, using the access network 911, the core network 914, any intermediate network 920 and possible further infrastructure (not shown) as intermediaries. The OTT connection 950 may be transparent in the sense that the participating communication devices through which the OTT connection 950 passes are unaware of routing of uplink and downlink communications. For example, the base station 912 may not or need not be informed about the past routing of an incoming downlink communication with data originating from the host computer 930 to be forwarded (e.g., handed over) to a connected UE 991. Similarly, the base station 912 need not be aware of the future routing of an outgoing uplink communication originating from the UE 991 towards the host computer 930.

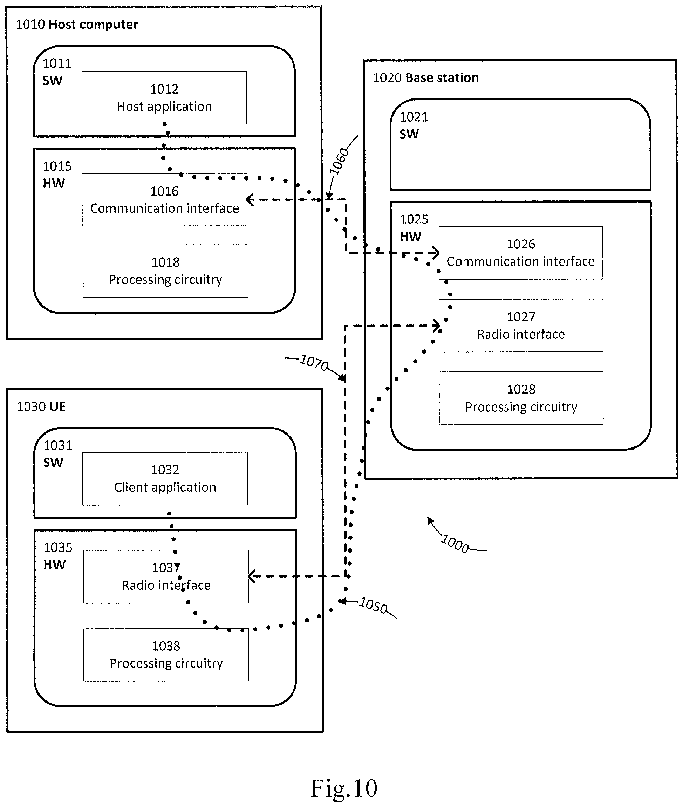

Fig.10 is a block diagram illustrating a host computer communicating via a base station with a UE over a partially wireless connection in accordance with some embodiments of the present disclosure.

Example implementations, in accordance with an embodiment, of the UE, base station and host computer discussed in the preceding paragraphs will now be described with reference to Fig.10. In a communication system 1000, a host computer 1010 comprises hardware 1015 including a communication interface 1016 configured to set up and maintain a wired or wireless connection with an interface of a different communication device of the communication system 1000. The host computer 1010 further comprises a processing circuitry 1018, which may have storage and/or processing capabilities. In particular, the processing circuitry 1018 may comprise one or more programmable processors, application-specific integrated circuits, field programmable gate arrays or combinations of these (not shown) adapted to execute instructions. The host computer 1010 further comprises software 1011, which is stored in or accessible by the host computer 1010 and executable by the processing circuitry 1018. The software 1011 includes a host application 1012. The host application 1012 may be operable to provide a service to a remote user, such as UE 1030 connecting via an OTT connection 1050 terminating at the UE 1030 and the host computer 1010. In providing the service to the remote user, the host application 1012 may provide user data which is transmitted using the OTT connection 1050.

The communication system 1000 further includes a base station 1020 provided in a telecommunication system and comprising hardware 1025 enabling it to communicate with the host computer 1010 and with the UE 1030. The hardware 1025 may include a communication interface 1026 for setting up and maintaining a wired or wireless connection with an interface of a different communication device of the communication system 1000, as well as a radio interface 1027 for setting up and maintaining at least a wireless connection 1070 with the UE 1030 located in a coverage area (not shown in Fig.10) served by the base station 1020. The communication interface 1026 may be configured to facilitate a connection 1060 to the host computer 1010. The connection 1060 may be direct or it may pass through a core network (not shown in Fig.10) of the telecommunication system and/or through one or more intermediate networks outside the telecommunication system. In the embodiment shown, the hardware 1025 of the base station 1020 further includes a processing circuitry 1028, which may comprise one or more programmable processors, application-specific integrated circuits, field programmable gate arrays or combinations of these (not shown) adapted to execute instructions. The base station 1020 further has software 1021 stored internally or accessible via an external connection.

The communication system 1000 further includes the UE 1030 already referred to. Its hardware 1035 may include a radio interface 1037 configured to set up and maintain a wireless connection 1070 with a base station serving a coverage area in which the UE 1030 is currently located. The hardware 1035 of the UE 1030 further includes a processing circuitry 1038, which may comprise one or more programmable processors, application-specific integrated circuits, field programmable gate arrays or combinations of these (not shown) adapted to execute instructions. The UE 1030 further comprises software 1031, which is stored in or accessible by the UE 1030 and executable by the processing circuitry 1038. The software 1031 includes a client application 1032. The client application 1032 may be operable to provide a service to a human or non-human user via the UE 1030, with the support of the host computer 1010. In the host computer 1010, an executing host application 1012 may communicate with the executing client application 1032 via the OTT connection 1050 terminating at the UE 1030 and the host computer 1010. In providing the service to the user, the client application 1032 may receive request data from the host application 1012 and provide user data in response to the request data. The OTT connection 1050 may transfer both the request data and the user data. The client application 1032 may interact with the user to generate the user data that it provides.

It is noted that the host computer 1010, the base station 1020 and the UE 1030 illustrated in Fig.10 may be similar or identical to the host computer 930, one of base stations 912a, 912b, 912c and one of UEs 991, 992 of Fig.9, respectively. This is to say, the inner workings of these entities may be as shown in Fig.10 and independently, the surrounding network topology may be that of Fig.9.

In Fig.10, the OTT connection 1050 has been drawn abstractly to illustrate the communication between the host computer 1010 and the UE 1030 via the base station 1020, without explicit reference to any intermediary devices and the precise routing of messages via these devices. Network infrastructure may determine the routing, which it may be configured to hide from the UE 1030 or from the service provider operating the host computer 1010, or both. While the OTT connection 1050 is active, the network infrastructure may further take decisions by which it dynamically changes the routing (e.g., on the basis of load balancing consideration or reconfiguration of the network).

Wireless connection 1070 between the UE 1030 and the base station 1020 is in accordance with the teachings of the embodiments described throughout this disclosure. One or more of the various embodiments improve the performance of OTT services provided to the UE 1030 using the OTT connection 1050, in which the wireless connection 1070 forms the last segment. More precisely, the teachings of these embodiments may improve the latency and the power consumption, and thereby provide benefits such as lower complexity, reduced time required to access a cell, better responsiveness, extended battery lifetime, etc.

A measurement procedure may be provided for the purpose of monitoring data rate, latency and other factors on which the one or more embodiments improve. There may further be an optional network functionality for reconfiguring the OTT connection 1050 between the host computer 1010 and the UE 1030, in response to variations in the measurement results. The measurement procedure and/or the network functionality for reconfiguring the OTT connection 1050 may be implemented in software 1011 and hardware 1015 of the host computer 1010 or in software 1031 and hardware 1035 of the UE 1030, or both. In embodiments, sensors (not shown) may be deployed in or in association with communication devices through which the OTT connection 1050 passes; the sensors may participate in the measurement procedure by supplying values of the monitored quantities exemplified above, or supplying values of other physical quantities from which the software 1011, 1031 may compute or estimate the monitored quantities. The reconfiguring of the OTT connection 1050 may include message format, retransmission settings, preferred routing etc.; the reconfiguring need not affect the base station 1020, and it may be unknown or imperceptible to the base station 1020. Such procedures and functionalities may be known and practiced in the art. In certain embodiments, measurements may involve proprietary UE signaling facilitating the host computer 1010's measurements of throughput, propagation times, latency and the like. The measurements may be implemented in that the software 1011 and 1031 causes messages to be transmitted, in particular empty or 'dummy' messages, using the OTT connection 1050 while it monitors propagation times, errors etc.

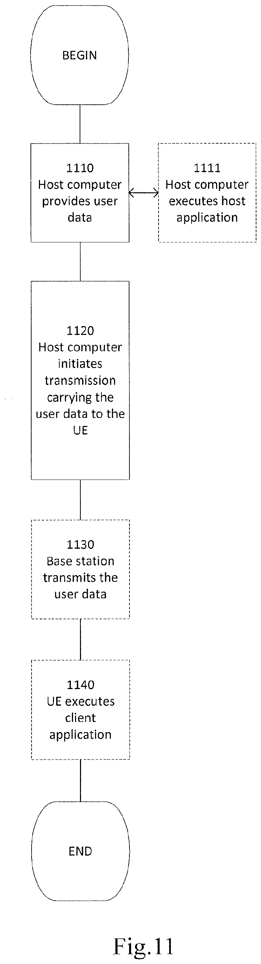

Fig.11 is a flowchart illustrating a method implemented in a communication system, in accordance with an embodiment. The communication system includes a host computer, a base station and a UE which may be those described with reference to Fig.9 and Fig.10. For simplicity of the present disclosure, only drawing references to Fig.11 will be included in this section. In step 1110, the host computer provides user data. In substep 1111 (which may be optional) of step 1110, the host computer provides the user data by executing a host application. In step 1120, the host computer initiates a transmission carrying the user data to the UE. In step 1130 (which may be optional), the base station transmits to the UE the user data which was carried in the transmission that the host computer initiated, in accordance with the teachings of the embodiments described throughout this disclosure. In step 1140 (which may also be optional), the UE executes a client application associated with the host application executed by the host computer.

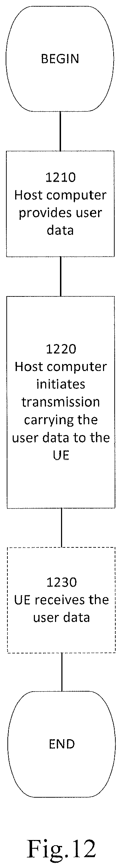

Fig.12 is a flowchart illustrating a method implemented in a communication system, in accordance with an embodiment. The communication system includes a host computer, a base station and a UE which may be those described with reference to Fig.9 and Fig.10. For simplicity of the present disclosure, only drawing references to Fig.12 will be included in this section. In step 1210 of the method, the host computer provides user data. In an optional substep (not shown) the host computer provides the user data by executing a host application. In step 1220, the host computer initiates a transmission carrying the user data to the UE. The transmission may pass via the base station, in accordance with the teachings of the embodiments described throughout this disclosure. In step 1230 (which may be optional), the UE receives the user data carried in the transmission.

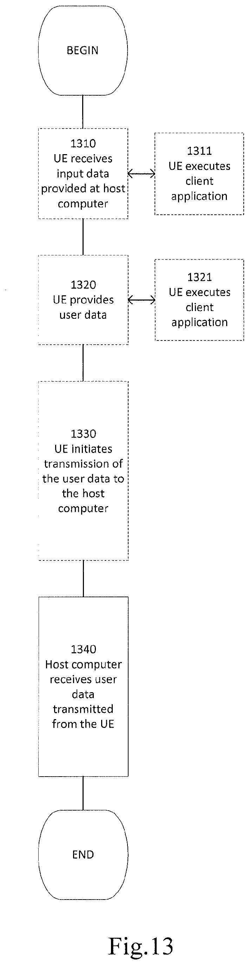

Fig.13 is a flowchart illustrating a method implemented in a communication system, in accordance with an embodiment. The communication system includes a host computer, a base station and a UE which may be those described with reference to Fig.9 and Fig.10. For simplicity of the present disclosure, only drawing references to Fig.13 will be included in this section. In step 1310 (which may be optional), the UE receives input data provided by the host computer. Additionally or alternatively, in step 1320, the UE provides user data. In substep 1321 (which may be optional) of step 1320, the UE provides the user data by executing a client application. In substep 1311 (which may be optional) of step 1310, the UE executes a client application which provides the user data in reaction to the received input data provided by the host computer. In providing the user data, the executed client application may further consider user input received from the user. Regardless of the specific manner in which the user data was provided, the UE initiates, in substep 1330 (which may be optional), transmission of the user data to the host computer. In step 1340 of the method, the host computer receives the user data transmitted from the UE, in accordance with the teachings of the embodiments described throughout this disclosure.

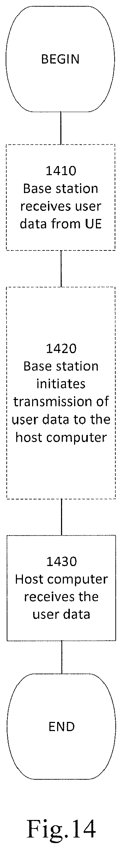

Fig.14 is a flowchart illustrating a method implemented in a communication system, in accordance with an embodiment. The communication system includes a host computer, a base station and a UE which may be those described with reference to Fig.9 and Fig.10. For simplicity of the present disclosure, only drawing references to Fig.14 will be included in this section. In step 1410 (which may be optional), in accordance with the teachings of the embodiments described throughout this disclosure, the base station receives user data from the UE. In step 1420 (which may be optional), the base station initiates transmission of the received user data to the host computer. In step 1430 (which may be optional), the host computer receives the user data carried in the transmission initiated by the base station.

In general, the various exemplary embodiments may be implemented in hardware or special purpose chips, circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, random access memory (RAM), etc. As will be appreciated by one of skill in the art, the function of the program modules may be combined or distributed as desired in various embodiments. In addition, the function may be embodied in whole or partly in firmware or hardware equivalents such as integrated circuits, field programmable gate arrays (FPGA), and the like.

**Claims**

1. A method (400) performed by a network node, comprising:

   determining (402) an association between a synchronization signal, SS, and physical broadcast channel, PBCH, block, SSB, and a random access, RA, occasion in a two-step RA procedure in which a preamble and a physical uplink shared channel, PUSCH, are transmitted respectively at the RA occasion and a PUSCH occasion in one message, based at least in part on whether RA resource is shared by the two-step RA procedure and a four-step RA procedure; and
   transmitting (404) information indicating the association to a terminal device,
   wherein a RA occasion is shared by the two-step RA procedure and the four-step RA procedure,
   **characterized in that**
   the information indicating the association between the SSB and the RA occasion in the two-step RA procedure comprises a first parameter to indicate: a number of preambles mapped to an SSB for the two-step RA procedure, and
   wherein the preambles mapped to the SSB for the two-step RA procedure are configured by using at least a part of contention free preambles initially configured for the four-step RA procedure.

2. The method according to claim 1, wherein the association between the SSB and the RA occasion comprises: mapping of the SSB to one or more preambles in the RA occasion.

3. The method according to claim 1, wherein the shared RA occasion is configured with separate preambles for the two-step RA procedure and the four-step RA procedure.

4. The method according to claim 1, wherein the information indicating the association between the SSB and the RA occasion in the two-step RA procedure further comprises a second parameter to indicate:
   a total number of preambles for the two-step RA procedure and the four-step RA procedure in the shared RA occasion.

5. The method according to claim 1 or 4, wherein the two-step RA procedure and the four-step RA procedure are configured with the same association between a SSB and the shared RA occasion.

6. A method (500) performed by a terminal device, comprising:

   receiving (502), from a network node, information indicating an association between a synchronization signal, SS, and physical broadcast channel, PBCH, block, SSB, and a random access, RA, occasion in a two-step RA procedure in which a preamble and a physical uplink shared channel, PUSCH, are transmitted respectively at the RA occasion and a PUSCH occasion in one message, wherein the association is based at least in part on whether RA resource is shared by the two-step RA procedure and a four-step RA procedure,

wherein a RA occasion is shared by the two-step RA procedure and the four-step RA procedure,

**characterized in that**

the information indicating the association between the SSB and the RA occasion in the two-step RA procedure comprises a first parameter to indicate: a number of preambles mapped to a SSB for the two-step RA procedure, and

wherein the preambles mapped to the SSB for the two-step RA procedure are configured by using at least a part of contention free preambles initially configured for the four-step RA procedure.

7. The method according to claim 6, wherein the association between the SSB and the RA occasion comprises: mapping of the SSB to one or more preambles in the RA occasion.

8. The method according to claim 6, wherein the shared RA occasion is configured with separate preambles for the two-step RA procedure and the four-step RA procedure.

9. The method according to claim 6, wherein the information indicating the association between the SSB and the RA occasion in the two-step RA procedure further comprises a second parameter to indicate: a total number of preambles for the two-step RA procedure and the four-step RA procedure in the shared RA occasion.

10. The method according to claim 6 or 9, wherein the two-step RA procedure and the four-step RA procedure are configured with the same association between a SSB and the shared RA occasion.

11. A network node (600), comprising:

   one or more processors (601); and
   one or more memories (602) comprising computer program codes (603),
   the one or more memories (602) and the computer program codes (603) configured to, with the one or more processors (601), cause the network node (600) to perform the method according to any one of claims 1 to 5.

12. A terminal device (600), comprising:

   one or more processors (601); and
   one or more memories (602) comprising computer program codes (603),
   the one or more memories (602) and the computer program codes (603) configured to, with the one or more processors (601), cause the terminal device (600) to perform the method according to any one of claims 6 to 10.

13. A computer-readable medium having computer program codes (603) embodied thereon for use with a computer, wherein the computer program codes (603) comprise codes for performing the method according to any one of claims 1 to 5.

14. A computer-readable medium having computer program codes (603) embodied thereon for use with a computer, wherein the computer program codes (603) comprise codes for performing the method according to any one of claims 6 to 10.


**Patentansprüche**

1. Verfahren (400), das von einem Netzwerkknoten durchgeführt wird, umfassend:

   Bestimmen (402) einer Assoziation zwischen einem Synchronisationssignal, SS, und physikalischen Rundsendungskanal-, PBCH, -Block, SSB, und einer Zufallszugriffsgelegenheit, RA, in einer zweistufigen RA-Prozedur, in der eine Präambel und ein gemeinsam genutzter physikalischer Uplink-Kanal, PUSCH, jeweils bei der RA-Gelegenheit und einer PUSCH-Gelegenheit in einer einzigen Nachricht übertragen werden, zumindest teilweise basierend darauf, ob die RA-Ressource durch die zweistufige RA-Prozedur und eine vierstufige RA-Prozedur gemeinsam genutzt wird; und

Übertragen (404) von Informationen, die die Assoziation zu einer Endgerätevorrichtung angeben, wobei eine RA-Gelegenheit von der zweistufigen RA-Prozedur und der vierstufigen RA-Prozedur gemeinsam genutzt wird,

**dadurch gekennzeichnet, dass**

die Information, die die Assoziation zwischen dem SSB und der RA-Gelegenheit in der zweistufigen RA-Prozedur angibt, einen ersten Parameter umfasst, der angibt: eine Anzahl von Präambeln, die auf einen SSB für die zweistufige RA-Prozedur abgebildet werden, und

wobei die auf den SSB abgebildeten Präambeln für die zweistufige RA-Prozedur konfiguriert werden, indem zumindest ein Teil der ursprünglich für die vierstufige RA-Prozedur konfigurierten konkurrenzfreien Präambeln verwendet wird.

2. Verfahren nach Anspruch 1, wobei die Assoziation zwischen dem SSB und der RA-Gelegenheit umfasst: Abbilden des SSB auf eine oder mehrere Präambeln in der RA-Gelegenheit.

3. Verfahren nach Anspruch 1, wobei die gemeinsame RA-Gelegenheit mit separaten Präambeln für die zweistufige RA-Prozedur und die vierstufige RA-Prozedur konfiguriert ist.

4. Verfahren nach Anspruch 1, wobei die Information, die die Assoziation zwischen dem SSB und der RA-Gelegenheit in der zweistufigen RA-Prozedur angibt, ferner einen zweiten Parameter umfasst, der angibt: eine Gesamtzahl der Präambeln für die zweistufige RA-Prozedur und die vierstufige RA-Prozedur in der gemeinsamen RA-Gelegenheit.

5. Verfahren nach Anspruch 1 oder 4, wobei die zweistufige RA-Prozedur und die vierstufige RA-Prozedur mit der gleichen Assoziation zwischen einem SSB und der gemeinsamen RA-Gelegenheit konfiguriert sind.

6. Verfahren (500), das von einer Endgerätevorrichtung durchgeführt wird, umfassend:

Empfangen (502) von Informationen von einem Netzwerkknoten, die eine Assoziation zwischen einem Synchronisationssignal, SS, und physikalischen Rundsendungskanal-, PBCH, -Block, SSB, und einer Zufallszugriffsgelegenheit, RA, in einer zweistufigen RA-Prozedur angeben, in der eine Präambel und ein gemeinsam genutzter physikalischer Uplink-Kanal, PUSCH, jeweils bei der RA-Gelegenheit und einer PUSCH-Gelegenheit in einer einzigen Nachricht übertragen werden, wobei die Assoziation zumindest teilweise darauf basiert, ob die RA-Ressource von der zweistufigen RA-Prozedur und einer vierstufigen RA-Prozedur gemeinsam genutzt wird,

wobei eine RA-Gelegenheit von der zweistufigen RA-Prozedur und der vierstufigen RA-Prozedur gemeinsam genutzt wird,

**dadurch gekennzeichnet, dass**

die Information, die die Assoziation zwischen dem SSB und der RA-Gelegenheit in der zweistufigen RA-Prozedur angibt, einen ersten Parameter umfasst, der angibt: eine Anzahl von Präambeln, die auf einen SSB für die zweistufige RA-Prozedur abgebildet werden, und

wobei die auf den SSB abgebildeten Präambeln für die zweistufige RA-Prozedur konfiguriert werden, indem zumindest ein Teil der ursprünglich für die vierstufige RA-Prozedur konfigurierten konkurrenzfreien Präambeln verwendet wird.

7. Verfahren nach Anspruch 6, wobei die Assoziation zwischen dem SSB und der RA-Gelegenheit umfasst: Abbilden des SSB auf eine oder mehrere Präambeln in der RA-Gelegenheit.

8. Verfahren nach Anspruch 6, wobei die gemeinsame RA-Gelegenheit mit separaten Präambeln für die zweistufige RA-Prozedur und die vierstufige RA-Prozedur konfiguriert ist.

9. Verfahren nach Anspruch 6, wobei die Information, die die Assoziation zwischen dem SSB und der RA-Gelegenheit in der zweistufigen RA-Prozedur angibt, ferner einen zweiten Parameter umfasst, der angibt: eine Gesamtzahl der Präambeln für die zweistufige RA-Prozedur und die vierstufige RA-Prozedur in der gemeinsamen RA-Gelegenheit.

10. Verfahren nach Anspruch 6 oder 9, wobei die zweistufige RA-Prozedur und die vierstufige RA-Prozedur mit der gleichen Assoziation zwischen einem SSB und der gemeinsamen RA-Gelegenheit konfiguriert sind.

**11.** Netzwerkknoten (600), der Folgendes umfasst:

einen oder mehrere Prozessoren (601); und
einen oder mehrere Speicher (602) mit Computerprogrammcodes (603),
wobei der eine oder die mehreren Speicher (602) und die Computerprogrammcodes (603) konfiguriert sind, um mit dem einen oder den mehreren Prozessoren (601) den Netzwerkknoten (600) zu veranlassen, das Verfahren nach einem der Ansprüche 1 bis 5 durchzuführen.

**12.** Endgerätevorrichtung (600), die Folgendes umfasst:

einen oder mehrere Prozessoren (601); und
einen oder mehrere Speicher (602) mit Computerprogrammcodes (603),
wobei der eine oder die mehreren Speicher (602) und die Computerprogrammcodes (603) konfiguriert sind, um mit dem einen oder den mehreren Prozessoren (601) die Endvorrichtung (600) zu veranlassen, das Verfahren nach einem der Ansprüche 6 bis 10 durchzuführen.

**13.** Computerlesbares Medium, das darauf enthaltene Computerprogrammcodes (603) zur Verwendung mit einem Computer aufweist, wobei die Computerprogrammcodes (603) Codes zur Durchführung des Verfahrens nach einem der Ansprüche 1 bis 5 umfassen.

**14.** Computerlesbares Medium, das darauf enthaltene Computerprogrammcodes (603) zur Verwendung mit einem Computer aufweist, wobei die Computerprogrammcodes (603) Codes zur Durchführung des Verfahrens nach einem der Ansprüche 6 bis 10 umfassen.

**Revendications**

**1.** Procédé (400) exécuté par un noeud de réseau, comprenant :

la détermination (402) d'une association entre un bloc, SSB, de signal de synchronisation, SS, et de canal de diffusion physique, PBCH, et une occasion d'accès aléatoire, RA, dans une procédure RA en deux étapes dans laquelle un préambule et un canal physique partagé de liaison montante, PUSCH, sont transmis respectivement à l'occasion RA et à une occasion PUSCH dans un message, sur la base au moins en partie du fait que la ressource RA est partagée ou non par la procédure RA en deux étapes et une procédure RA en quatre étapes ; et
la transmission (404) d'informations indiquant l'association à un dispositif terminal,
dans lequel une occasion RA est partagée par la procédure RA en deux étapes et la procédure RA en quatre étapes,
**caractérisé en ce que** les informations indiquant l'association entre le SSB et l'occasion RA dans la procédure RA en deux étapes comprennent un premier paramètre pour indiquer : un nombre de préambules mappés sur un SSB pour la procédure RA en deux étapes, et
dans lequel les préambules mappés sur le SSB pour la procédure RA en deux étapes sont conçus à l'aide d'au moins une partie des préambules sans conflit initialement conçus pour la procédure RA en quatre étapes.

**2.** Procédé selon la revendication 1, dans lequel l'association entre l'occasion SSB et l'occasion RA comprend :
le mappage du SSB sur un ou plusieurs préambules dans l'occasion RA.

**3.** Procédé selon la revendication 1, dans lequel l'occasion RA partagée est conçue avec des préambules distincts pour la procédure RA en deux étapes et la procédure RA en quatre étapes.

**4.** Procédé selon la revendication 1, dans lequel les informations indiquant l'association entre le SSB et l'occasion RA dans la procédure RA en deux étapes comprennent en outre un second paramètre pour indiquer :
un nombre total de préambules pour la procédure RA en deux étapes et la procédure RA en quatre étapes dans l'occasion RA partagée.

**5.** Procédé selon la revendication 1 ou 4, dans lequel la procédure RA en deux étapes et la procédure RA en quatre étapes sont conçues avec la même association entre un SSB et l'occasion RA partagée.

**6.** Procédé (500) exécuté par un dispositif terminal, comprenant :

la réception (502), à partir d'un noeud de réseau, d'informations indiquant une association entre un bloc, SSB, de signal de synchronisation, SS, et de canal de diffusion physique, PBCH, et une occasion d'accès aléatoire, RA, dans une procédure RA en deux étapes dans laquelle un préambule et un canal physique partagé de liaison montante, PUSCH, sont transmis respectivement à l'occasion RA et à une occasion PUSCH dans un message, dans laquelle l'association est basée au moins en partie sur le fait que la ressource RA est partagée par la procédure RA en deux étapes et une procédure RA en quatre étapes,

dans lequel une occasion RA est partagée par la procédure RA en deux étapes et la procédure RA en quatre étapes,

**caractérisé en ce que** les informations indiquant l'association entre le SSB et l'occasion RA dans la procédure RA en deux étapes comprennent un premier paramètre pour indiquer : un nombre de préambules mappés sur un SSB pour la procédure RA en deux étapes, et

dans lequel les préambules mappés sur le SSB pour la procédure RA en deux étapes sont conçus à l'aide d'au moins une partie des préambules sans conflit initialement conçus pour la procédure RA en quatre étapes.

7. Procédé selon la revendication 6, dans lequel l'association entre le SSB et l'occasion RA comprend :
le mappage du SSB sur un ou plusieurs préambules dans l'occasion RA.

8. Procédé selon la revendication 6, dans lequel l'occasion RA partagée est conçue avec des préambules distincts pour la procédure RA en deux étapes et la procédure RA en quatre étapes.

9. Procédé selon la revendication 6, dans lequel les informations indiquant l'association entre le SSB et l'occasion RA dans la procédure RA en deux étapes comprennent en outre un second paramètre pour indiquer :
un nombre total de préambules pour la procédure RA en deux étapes et la procédure RA en quatre étapes dans l'occasion RA partagée.

10. Procédé selon la revendication 6 ou 9, dans lequel la procédure RA en deux étapes et la procédure RA en quatre étapes sont conçues avec la même association entre un SSB et l'occasion RA partagée.

11. Noeud de réseau (600), comprenant :

un ou plusieurs processeurs (601) ; et
une ou plusieurs mémoires (602) comprenant des codes de programme informatique (603),
lesdites une ou plusieurs mémoires (602) et les codes de programme informatique (603) étant conçus pour, avec lesdits un ou plusieurs processeurs (601), amener le noeud de réseau (600) à exécuter le procédé selon l'une quelconque des revendications 1 à 5.

12. Dispositif terminal (600), comprenant :

un ou plusieurs processeurs (601) ; et
une ou plusieurs mémoires (602) comprenant des codes de programme informatique (603),
lesdites une ou plusieurs mémoires (602) et les codes de programme informatique (603) étant conçus pour, avec lesdits un ou plusieurs processeurs (601), amener le dispositif terminal (600) à exécuter le procédé selon l'une quelconque des revendications 6 à 10.

13. Support lisible par ordinateur sur lequel sont incorporés des codes de programme informatique (603) pour une utilisation avec un ordinateur, dans lequel les codes de programme informatique (603) comprennent des codes pour exécuter le procédé selon l'une quelconque des revendications 1 à 5.

14. Support lisible par ordinateur sur lequel sont incorporés des codes de programme informatique (603) pour une utilisation avec un ordinateur, dans lequel les codes de programme informatique (603) comprennent des codes pour exécuter le procédé selon l'une quelconque des revendications 6 à 10.

UE                                                                    gNB

| 101 SS/PBCH block: PSS, SSS, PBCH |
| 102 System information (RMSI, OSI) |
| 103 PRACH  (msg1) |
| 104 RAR (msg2) |
| 105 PUSCH (msg3) |
| 106 CRM (msg4) |

Fig.1A

EP 3 959 938 B1

□ = 1 PRACH occasion

Frequency

FDM of PRACH occasions
(1, 2, 4, or 8 occasions,
always contiguous)
Frequency of first
PRACH occasion

Time

One _PRACH configuration period_ (10, 20, 40, 80, or 160 ms).
A row in the RACH configuration table specifies the time-
domain PRACH occasion pattern for one PRACH
configuration period.

The pattern then repeats ...

Fig.1B

Fig. 1C

Fig.1D

EP 3 959 938 B1

Example:
- #SSBs = 8
- *M* = 32 (i.e. 2 SSBs per PRACH occasion)
- PRACH FDM = 2
- PRACH format A3 (2 TD occasion/slot)
- PRACH configuration period = 20 ms
- 2 PRACH slots per configuration period

Frequency

|←————— 1 PRACH slot —————→|   1 PRACH occasion

| Preambles 32-63 map to SSB3<br>Preambles 0-31 map to SSB2 | Preambles 32-63 map to SSB7<br>Preambles 0-31 map to SSB6 | | Preambles 32-63 map to SSB3<br>Preambles 0-31 map to SSB2 | Preambles 32-63 map to SSB7<br>Preambles 0-31 map to SSB6 |
| Preambles 32-63 map to SSB1<br>Preambles 0-31 map to SSB0 | Preambles 32-63 map to SSB5<br>Preambles 0-31 map to SSB4 | | Preambles 32-63 map to SSB1<br>Preambles 0-31 map to SSB0 | Preambles 32-63 map to SSB5<br>Preambles 0-31 map to SSB4 |

(Then repeats in next PRACH configuration period)

Time

0 ms |←——————— 1 PRACH configuration period ———————→| 20 ms

EP 3 959 938 B1

Fig.1E

**Example:**
- #SSBs-per-PRACH-occasion = 4
- #CB-preambles-per-SSB = 4

64 preambles configured for the cell (per PRACH occasion)

01          16          32          48          63

Map to SSB 0      SSB 1          SSB 2          SSB 3

▨ = Preamble indices for CBRA
▩ = Preamble indices for CFRA

EP 3 959 938 B1

Fig.1F

Fig.2

gNB

UE

201 SS/PBCH block:

PSS, SSS, PBCH

202 System information (RMSI, OSI)

203a msgA: Preamble

203b msgA: PUSCH

204 msgB

**2-step or 4-step RA: 64 preambles configured for the cell (per PRACH occasion)**

0 1       16       32       48       63

Map to SSB 0      SSB 1      SSB 2      SSB 3

<u>Example</u>:

2-step or 4-step RA
- #SSBs-per-PRACH-occasion = 4
- #CB-preambles-per-SSB = 4
- #totalNumberOfRA-Preambles = 64

▨ = Preamble indices for CBRA
▨ = Preamble indices for CFRA

Fig.3A

EP 3 959 938 B1

**2-step RA: 4x4=16 preambles for the cell (per PRACH occasion)**

SSB 0   SSB 1   SSB 2   SSB 3

**Example**:

2-step RA (contention based only)
- #SSBs-per-PRACH-occasion_2-step = 4
- #Preambles-per-SSB_2-step = 4

▨ = Preamble indices for CBRA

Fig.3B

EP 3 959 938 B1

**2-step RA: 64 preambles configured for the cell (per PRACH occasion)**

0 1      16      32      48      63

Map to SSB 0      SSB 1      SSB 2      SSB 3

<u>Example</u>:

2-step RA (contention based and contention free)
- #SSBs-per-PRACH-occasion_2-step = 4
- #Preambles-per-SSB _2-step = 4
- #totalNumberOfRA-Preambles_2-step = 64

= Preamble indices for CBRA
= Preamble indices for CFRA

Fig.3C

EP 3 959 938 B1

56 preambles configured for the cell (per PRACH occasion) for 4-step RA          8 preambles for 2-step RA

0 1                    14                    28                    42                    56        63

Map to SSB 0          SSB 1          SSB 2          SSB 3          SSB 0   SSB 1 SSB 2   SSB 3

= Preamble indices for CBRA in 4-step RA
= Preamble indices for CFRA in 4-step RA
= Preamble indices for 2-step RA

Fig.3D

EP 3 959 938 B1

56 preambles configured for the cell (per PRACH occasion) for 4-step RA

4 preambles for 2-step RA

0 1    14    28    42    56    63

Map to SSB 0    SSB 1    SSB 2    SSB 3    SSB 0  SSB 1 SSB 2  SSB 3

▨ = Preamble indices for CBRA in 4-step RA
▦ = Preamble indices for CFRA in 4-step RA
▩ = Preamble indices for 2-step RA
☐ = Preamble indices not used

Fig.3E

EP 3 959 938 B1

64 preambles configured for the cell (per PRACH occasion)

0 1                    16                    32                    48                    63

Map to SSB 0          SSB 1                 SSB 2                 SSB 3

**Example**:

- #SSBs-per-PRACH-occasion = 4
- #CB-preambles-per-SSB = 4
- #CB-preambles-per-SSB-2step = 4

▨ = Preamble indices for CBRA in 4-step RA
▩ = Preamble indices for CFRA in 4-step RA
▧ = Preamble indices for 2-step RA

Fig.3F

EP 3 959 938 B1

400

Determine an association between a DL transmission and an UL transmission in a two-step RA procedure, based at least in part on RA resource configuration for the two-step RA procedure

402

Transmit information indicating the association to a terminal device

404

Fig.4

500

Receive, from a network node, information indicating an association between a DL transmission and an UL transmission in a two-step RA procedure

502

Perform the two-step RA procedure, according to the information received from the network node

504

Fig.5

600

APPARATUS

601                                    602

PROCESSOR ←→ MEMORY

603

Fig.6

700

APPARATUS

701                                    702

Determining
Unit

Transmitting
Unit

Fig.7

800

APPARATUS

801                                    802

Receiving
Unit

Performing
Unit

Fig.8

Fig.9

Fig.10

BEGIN

1110
Host computer
provides user
data

1111
Host computer
executes host
application

1120
Host computer
initiates
transmission
carrying the
user data to the
UE

1130
Base station
transmits the
user data

1140
UE executes
client
application

END

Fig.11

BEGIN

1210
Host computer
provides user
data

1220
Host computer
initiates
transmission
carrying the
user data to the
UE

1230
UE receives the
user data

END

Fig.12

BEGIN

1310
UE receives
input data
provided at host
computer

1311
UE executes
client
application

1320
UE provides
user data

1321
UE executes
client
application

1330
UE initiates
transmission of
the user data to
the host
computer

1340
Host computer
receives user
data
transmitted
from the UE

END

Fig.13

BEGIN

1410
Base station
receives user
data from UE

1420
Base station
initiates
transmission of
user data to the
host computer

1430
Host computer
receives the
user data

END

Fig.14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **QUALCOMM INCORPORATED.** Procedures for Two-Step RACH. *3GPP draft, R1-1904993*